# EUROPÄISCHE PATENTANMELDUNG

(11) **EP 4 467 519 A1**
(43) Veröffentlichungstag der Anmeldung: **27.11.2024**
(21) Anmeldenummer: 24177594.9
(22) Anmeldetag: 23.05.2024
(51) Int. Cl.: C02F 1/44, C02F 1/00, B01D 61/14, B01D 61/22, B01D 65/02

(54) **FILTRATIONSANLAGE FÜR EIN TRINKWASSERLEITUNGSSYSTEM, TRINKWASSERLEITUNGSSYSTEM UND VERFAHREN ZUR STEUERUNG EINER FILTRATIONSANLAGE**

(30) Priorität: 23.05.2023 DE 102023113418
(71) Anmelder: Viega Technology GmbH & Co. KG, 57439 Attendorn (DE)
(72) Erfinder: Kramer, Dominik, 57439 Attendorn (DE); Schneider, Andreas, 57413 Finnentrop-Schönholthausen (DE)
(74) Vertreter: Cohausz & Florack

(57) **Zusammenfassung**

Die Erfindung betrifft eine Filtrationsanlage (106, 206) für ein Trinkwasserleitungssystem (102, 202). Die Filtrationsanlage (106, 206) ist dadurch gekennzeichnet, dass im Leitungssystem (116) ein Retentat-Ausgangs-Sensor (150) vorgesehen ist, mit dem der Volumenstrom, der Druck und/oder die Temperatur des aus dem Retentat-Ausgang (124) austretenden Wassers gemessen werden kann, und/oder dass im Leitungssystem (116) zwischen dem Filtrat-Ausgang (128) und dem Ausleitungspunkt (110) ein Aktiv-Wasserspeicher (260c-f) mit einem ansteuerbaren Wasserspeicher-Aktuator (270, 280, 310) vorgesehen ist, wobei in dem Aktiv-Wasserspeicher (260c-f) enthaltenes Wasser durch Ansteuerung des Wasserspeicher-Aktuators (270, 380, 310) aus dem Aktiv-Wasserspeicher (260c-f) in Richtung des Filtrat-Ausgangs (128) geleitet werden kann, oder ein Federdruck-Wasserspeicher (260g) mit einem federbelasteten beweglichen Element (318) vorgesehen ist, wobei das Wasservolumen des Federdruck-Wasserspeichers (260g) bei Erhöhung des Wasserdrucks durch Bewegung des beweglichen Elements (318) steigt, oder ein Durchlauf-Wasserspeicher (260a-b) vorgesehen ist. Die Erfindung betrifft weiter ein Trinkwasserleitungssystem (102, 202), ein Verfahren zur Steuerung einer Filtrationsanlage oder eines Trinkwasserleitungssystems sowie ein Computerprogramm.

## Beschreibung

Die vorliegende Erfindung betrifft eine Filtrationsanlage für ein Trinkwasserleitungssystem mit einem Einleitungspunkt zum Einleiten von Wasser in die Filtrationsanlage, mit einem Ausleitungspunkt zum Ausleiten von gefiltertem Wasser aus der Filtrationsanlage, mit einem Wasserfilter, insbesondere einem Membranfilter in Querstrom-Bauart (Querstrom-Filter), der einen Filter-Eingang, einen Filtrat-Ausgang (auch Permeat-Ausgang genannt) und einen Retentat-Ausgang aufweist, mit einem Ablasspunkt zum Ablassen von Wasser aus der Filtrationsanlage und mit einem Leitungssystem, wobei das Leitungssystem den Einleitungspunkt mit dem Filter-Eingang verbindet, den Filtrat-Ausgang mit dem Ausleitungspunkt verbindet und den Retentat-Ausgang mit dem Filter-Eingang und mit dem Ablasspunkt verbindet, wobei im Leitungssystem ein steuerbares Ablassventil vorgesehen ist, mit dem das Ablassen von Wasser aus der Filtrationsanlage am Ablasspunkt gesteuert werden kann. Die vorliegende Erfindung betrifft weiter ein Trinkwasserleitungssystem mit einer solchen Filtrationsanlage, ein Verfahren zur Steuerung einer solchen Filtrationsanlage sowie ein Computerprogramm.

Im Stand der Technik werden derartige Filtrationsanlagen, insbesondere in Form von Ultrafiltrationsanlagen, in Trinkwasserleitungssystemen eingesetzt, um das in dem Trinkwasserleitungssystem fließende Wasser zu filtern und von Verunreinigungen, beispielsweise Schwebestoffen oder Mikroorganismen, zu reinigen. Bekannt ist dabei zum Beispiel die Verwendung von Hohlfasermembran-Filtern, die zum Beispiel eine Porengröße im Bereich 20 - 50 nm aufweisen und ungelöste Partikel, Bakterien, insbesondere Legionellen, und sogar Viren aus dem Trinkwasser herausfiltern können.

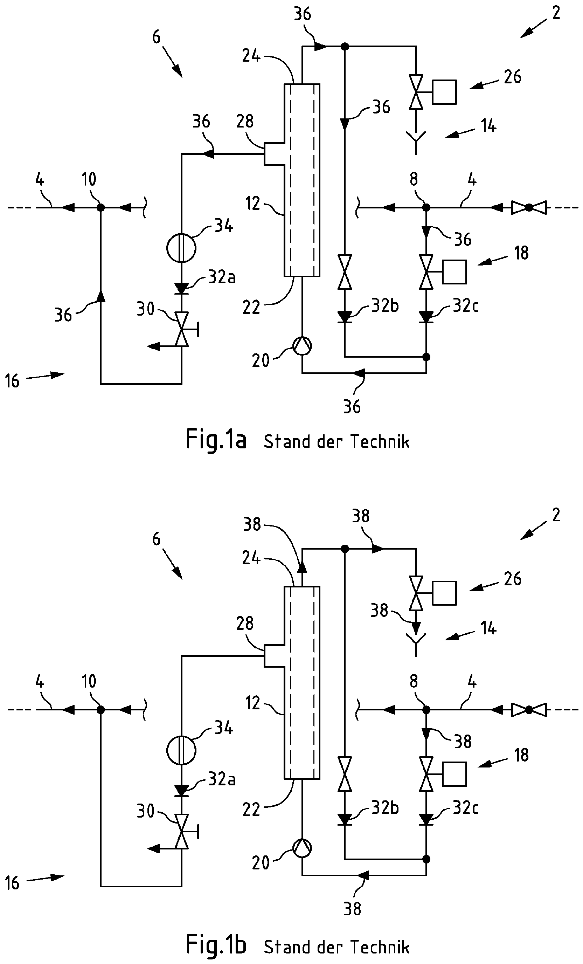

Ein Beispiel für ein Trinkwasserleitungssystem mit einer solchen Ultrafiltrationsanlage ist schematisch in Fig. 1a dargestellt.

Das Trinkwasserleitungssystem 2 weist eine Trinkwasserleitung 4 auf, an die eine Filtrationsanlage 6 angeschlossen ist. Die Filtrationsanlage 6 weist einen Einleitungspunkt 8 auf, an dem Wasser aus der Trinkwasserleitung 4 in die Filtrationsanlage 6 eingeleitet wird, einen Ausleitungspunkt 10, an dem gefiltertes Wasser aus der Filtrationsanlage 6 in die Trinkwasserleitung 4 geleitet wird, einen Querstrom-Wasserfilter 12 sowie einen Ablasspunkt 14 zum Ablassen von Wasser aus der Filtrationsanlage 6.

Die Filtrationsanlage 6 weist weiter ein Leitungssystem 16 mit mehreren Leitungen auf. Das Leitungssystem 16 verbindet den Einleitungspunkt 8 über ein steuerbares Einleitungs-Ventil 18 und eine Pumpe 20 mit dem Filter-Eingang 22 des Querstrom-Wasserfilters 12. Das Leitungssystem 16 verbindet weiter den Retentat-Ausgang 24 des Querstrom-Wasserfilters 12 über ein Ventil und die Pumpe 20 mit dem Filter-Eingang 22 des Querstrom-Wasserfilters 12 sowie über ein steuerbares Ablassventil 26 mit dem Ablasspunkt 14. Weiter verbindet das Leitungssystem 16 den Filtrat-Ausgang 28 des Querstrom-Wasserfilters 12 über ein Ventil 30 mit dem Ausleitungspunkt 10. In das Leitungssystem 16 sind weiter mehrere Rückflussverhinderer 32a-c integriert.

Fig. 1a illustriert den regulären Filtrationsbetrieb der Filtrationsanlage 6 anhand der Pfeile 36, die den Wasserfluss im Filtrationsbetrieb anzeigen. Beim Filtrationsbetrieb ist das Einleitungs-Ventil 18 geöffnet und das Ablassventil 26 geschlossen. Mit der Pumpe 20 wird das am Einleitungspunkt 8 aus der Trinkwasserleitung 4 in die Filtrationsanlage 6 eingeleitete Wasser in den Querstrom-Wasserfilter 12 geleitet. Ein Teil des Wassers gelangt durch das Filtermaterial des Querstrom-Wasserfilters 12 als Filtrat zum Filter-Ausgang 28 des Querstrom-Wasserfilters 12 und wird dann über den Ausleitungspunkt 10 zurück in die Trinkwasserleitung 4 abgeführt. Der übrige Teil des Wassers tritt aus dem Retentat-Ausgang 24 des Querstrom-Wasserfilters 12 aus und wird als Querstrom bzw. Cross Flow dem aus der Trinkwasserleitung entnommenen Wasser zugemischt und anschließend über die Pumpe 20 zurück zum Filter-Eingang 22 geleitet.

In bestimmten Abständen sind Spülungen des Wasserfilters 12 erforderlich, zum Beispiel wenn die mit dem Wasserfilter gefilterten Stoffe wie Schwebestoffe oder Mikroorganismen das Filtermaterial des Wasserfilters 12 teilweise zugesetzt haben oder sich im Leitungssystem zwischen Retentat-Ausgang 24 und Filter-Eingang 22 über einem gewissen Grad angereichert haben.

Fig. 1b illustriert einen Vorwärtsspülvorgang der Filtrationsanlage 6 anhand der Pfeile 38, die den Wasserfluss bei dem Vorwärtsspülvorgang anzeigen. Für den Vorwärtsspülvorgang wird das Ablassventil 26 bei geöffnetem Einleitungs-Ventil 18 ein- oder mehrmals nacheinander impulsartig geöffnet. Auf diese Weise kommt es im Leitungssystem 16 zu einem plötzlichen Druckabfall am Ablasspunkt 14, so dass das aus dem Retentat-Ausgang 24 des Querstrom-Filters 12 austretende Wasser zum Ablasspunkt 14 fließt und dadurch aus der Filtrationsanlage 6 abgeleitet wird. Über den Einleitungspunkt 8 fließt durch den dort herrschenden Wasserdruck neues Wasser aus der Trinkwasserleitung 4 nach.

Auf diese Weise kann das mit gefilterten Stoffen angereicherte Wasser aus der Filtrationsanlage 6 abgelassen und durch Wasser aus der Trinkwasserleitung 4 ersetzt werden, das eine geringere Stoffkonzentration an Verunreinigungen aufweist. Ebenfalls können sich durch die impulsartige Spülung an der Innenseite der Membran des Querstrom-Filters 12 angereicherte Partikel lösen. Diese werden ebenfalls mit ausgespült.

Neben Vorwärtsspülvorgängen ist es vorteilhaft, auch Rückspülvorgänge durchzuführen, bei denen Wasser in umgekehrter Richtung durch das Filtermaterial des Querstrom-Wasserfilters 12 geleitet wird, um zum Beispiel das Filtermaterial zusetzende Stoffe zu lösen.

Um den Wasserfilter 12 beim Rückspülen mit Filtrat, d.h. mit gefiltertem Wasser, zu spülen, wird bisher zwischen Filtratausgang und Ausleitungspunkt ein Membranausdehnungsgefäß 34 angeschlossen, das sonst als Druckausgleichsbehälter zum Beispiel in Heizungs- und Trinkwasseranlagen eingesetzt wird. Ein solches Membranausdehnungsgefäß 34 weist ein Gefäß mit einer darin angeordneten elastischen Membran, typischerweise Gummimembran, auf, die ein an das Leitungssystem anschließbares Wasserreservoir von einem mit inertem Gas, z. B. Stickstoff, gefüllten Gaspolster-Bereich trennt.

Durch entsprechende Einstellung der Druckverhältnisse im Leitungssystem kann ein Wasservolumen des Filtrats im Membranausdehnungsgefäß gespeichert und beim Rückspülen in das Leitungssystem abgegeben werden, so dass der Wasserfilter mit Filtrat rückgespült werden kann.

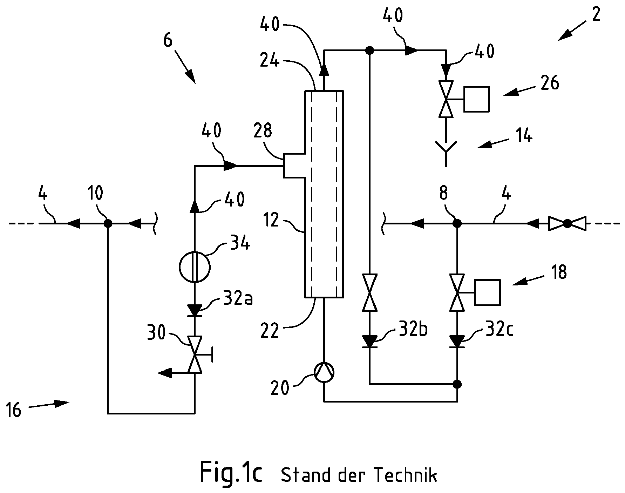

Auf diese Weise wird beim regulären Filtrationsbetrieb ein Teil des vom Filter-Ausgang 28 zum Ausleitungspunkt 10 geleiteten Wassers in dem Membranausdehnungsgefäß 34 zurückgehalten. Das Zurückhalten von Wasser im Membranausdehnungsgefäß 34 führt bei konventionell angeschlossenen Membranausdehnungsgefäß 34 zu stagnierendem Wasser. Aus diesem Grund ist erwogen worden, das Membranausdehnungsgefäß 34 derart anzuschließen, dass es während des Filtrationsbetriebs durchströmt wird, so dass das Wasser in dem Membranausdehnungsgefäß 34 stagnationsfrei zurückgehalten wird. Bei einem Rückspülvorgang wird das im Membranausdehnungsgefäß 34 zurückgehaltene Wasser zur Verfügung gestellt, was nachfolgend anhand der Fig. 1c erläutert wird.

Fig. 1c illustriert einen Rückspülvorgang der Filtrationsanlage 6 anhand der Pfeile 40, die den Wasserfluss bei dem Rückspülvorgang anzeigen. Für den Rückspülvorgang wird das Einleitungs-Ventil 18 geschlossen und das Ablassventil 26 bei geschlossenem Einleitungs-Ventil 18 ein- oder mehrmals nacheinander impulsartig geöffnet, so dass es am Ablasspunkt 14 zum plötzlichen Druckabfall kommt. Wegen des geschlossenen Einleitungs-Ventils 18 kann kein Wasser aus der Trinkwasserleitung 4 nachströmen. Weiterhin verhindert der Rückflussverhinderer 32a ein Rückströmen von Wasser aus der Trinkwasserleitung 4 über den Ausleitungspunkt 10 in die Filtrationsanlage 6. Der Druckabfall im Leitungssystem 16 durch das impulsartige Öffnen des Ablassventils 26 bewirkt, dass im Membranausdehnungsgefäß 34 gespeichertes Filtrat durch das Gaspolster im Membranausdehnungsgefäß 34 in das Leitungssystem 16 und durch den Filtrat-Ausgang 28 in den Querstrom-Wasserfilter 12 gedrückt wird, so dass dieser rückwärts gespült wird.

Es hat sich allerdings herausgestellt, dass eine solche Nutzung konventioneller Membranausdehnungsgefäße die Wartungsintervalle verkürzen kann, da die Membranausdehnungsgefäße eher für langsame Temperatur- und Druckausgleichsvorgänge ausgelegt sind und unter den dynamischen Verhältnissen einer Rückspülung zu verfrühtem Gasdruckverlust (Vordruck) beim Gaspolster führen. Bei einem solchen Druckverlust kann das Rückspülen des Wasserfilters nicht mehr ordnungsgemäß erfolgen. Der Wartungsaufwand ist bei derartigen Anlagen daher recht hoch, eine wirtschaftliche Nutzung der Anlagen wird dadurch negativ beeinflusst.

Weiterhin werden Membranausdehnungsgefäße typischerweise nicht in Warmwasser-Trinkwasserleitungen eingesetzt.

Gleichzeitig besteht ein Bedürfnis danach, eine zuverlässige und hygienische Rückspülung des Wasserfilters zu ermöglichen.

Bei einem alternativen Betrieb der Filtrationsanlage, bei dem auf Rückspülungen verzichtet wird, wodurch auch ein Membranausdehnungsgefäß entbehrlich wird, kann es nach aktuellem Kenntnisstand schneller zu einem Zusetzen des Wasserfilters und daher ebenfalls kürzeren Wartungsintervallen kommen.

Vor diesem Hintergrund liegt der vorliegenden Erfindung die Aufgabe zu Grunde, eine Filtrationsanlage, ein Trinkwassersystem und ein Verfahren zur Verfügung zu stellen, die ein oder mehrere der zuvor genannten Probleme reduzieren oder sogar beseitigen können.

Insbesondere sollen vorzugsweise eine Filtrationsanlage, ein Trinkwassersystem und ein Verfahren zur Verfügung gestellt werden, die einen wartungsarmen Betrieb der Filtrationsanlage sowie die Durchführung von Rückspülungen des Wasserfilters ermöglichen, die einen hygienisch unbedenklichen Zustand gewährleisten.

Die zuvor genannte Aufgabe wird gelöst durch eine Filtrationsanlage für ein Trinkwasserleitungssystem mit einem Einleitungspunkt zum Einleiten von Wasser in die Filtrationsanlage, mit einem Ausleitungspunkt zum Ausleiten von gefiltertem Wasser aus der Filtrationsanlage, mit einem Wasserfilter, insbesondere Querstrom-Filter, der einen Filter-Eingang, einen Filtrat-Ausgang und einen Retentat-Ausgang aufweist, mit einem Ablasspunkt zum Ablassen von Wasser aus der Filtrationsanlage und mit einem Leitungssystem, wobei das Leitungssystem den Einleitungspunkt mit dem Filter-Eingang verbindet, den Filtrat-Ausgang mit dem Ausleitungspunkt verbindet und den Retentat-Ausgang mit dem Filter-Eingang und mit dem Ablasspunkt verbindet, wobei im Leitungssystem ein steuerbares Ablassventil vorgesehen ist, mit dem das Ablassen von Wasser aus der Filtrationsanlage am Ablasspunkt gesteuert werden kann.

Gemäß einem ersten Aspekt der vorliegenden Erfindung ist im Leitungssystem ein Retentat-Ausgangs-Sensor vorgesehen, mit dem der Volumenstrom und/oder der Druck und/oder die Temperatur des aus dem Retentat-Ausgang austretenden Wassers gemessen werden kann. Auf diese Weise werden eine bessere Überwachung und/oder Steuerung der Filtrationsanlage ermöglicht, insbesondere bei der Durchführung von Rückspülvorgängen. Weiterhin sind durch den Retentat-Ausgangs-Sensor auch eine bessere Überwachung und/oder Steuerung der Filtrationsanlage bei anderen Spülvorgängen oder bei der Einstellung des Cross-Flow-Betriebs denkbar.

Zusätzlich oder alternativ zu dem Retentat-Ausgangs-Sensor des ersten Aspekts ist gemäß einem zweiten Aspekt der vorliegenden Erfindung im Leitungssystem zwischen dem Filtrat-Ausgang und dem Ausleitungspunkt ein Wasserspeicher vorgesehen, und zwar
- ein Durchlauf-Wasserspeicher oder
- ein Aktiv-Wasserspeicher mit einem ansteuerbaren Wasserspeicher-Aktuator, wobei in dem Aktiv-Wasserspeicher enthaltenes Wasser durch Ansteuerung des Wasserspeicher-Aktuators aus dem Aktiv-Wasserspeicher in Richtung des Filtrat-Ausgangs geleitet werden kann, oder
- ein Federdruck-Wasserspeicher mit einem federbelasteten beweglichen Element, wobei das Wasservolumen des Federdruck-Wasserspeichers bei Erhöhung des Wasserdrucks durch Bewegung des beweglichen Elements steigt.

Auf diese Weise wird eine zuverlässigere und sicherere Durchführung von Rückspülvorgängen ermöglicht.

Die Filtrationsanlage weist einen Einleitungspunkt zum Einleiten von Wasser in die Filtrationsanlage sowie einen Ausleitungspunkt zum Ausleiten von gefiltertem Wasser aus der Filtrationsanlage auf. Der Einleitungspunkt und/oder der Ausleitungspunkt sind insbesondere dazu ausgebildet, an eine Trinkwasserleitung eines Trinkwasserleitungssystems angeschlossen zu werden, beispielsweise an eine Warmwasser-Zirkulationsleitung. Es kann vorgesehen sein, dass die Filtrationsanlage am Einleitungs- und Ausleitungspunkt an dieselbe Trinkwasserleitung oder an verschiedene Trinkwasserleitungen angeschlossen ist.

Der Einleitungspunkt und/oder der Ausleitungspunkt können beispielsweise jeweils durch ein Abzweigstück, wie zum Beispiel T-Stück, gebildet werden, das an eine Trinkwasserleitung eines Trinkwasserleitungssystems angeschlossen ist und an dem die Filtrationsanlage angeschlossen ist.

Die Filtrationsanlage weist weiter einen Wasserfilter auf, der einen Filter-Eingang, einen Filtrat-Ausgang und einen Retentat-Ausgang aufweist. Bei dem Wasserfilter handelt es sich vorzugsweise um einen Querstrom-Filter, der in der Technik auch als Cross-Flow-Filter bezeichnet wird. Durch Verwenden eines Querstrom-Filters wird ein vorzeitiges Zusetzen des Wasserfilters verhindert. In einem Querstrom-Filter wird zu filterndes Wasser vom Filter-Eingang zum Retentat-Ausgang geleitet, wobei das Wasser auf dem Weg zum Retentat-Ausgang an einem Filtermaterial, insbesondere einer Filtermembran, vorbei fließt, durch die ein Teil des Wassers gefiltert zum Filtrat-Ausgang gelangt, während Verunreinigungen mit dem übrigen Wasser zum Retentat-Ausgang geleitet werden.

Der Wasserfilter ist vorzugsweise ein Ultrafilter mit einer Porengröße des Filtermaterials von vorzugsweise weniger als 100 nm, vorzugsweise 20 - 50 nm. Entsprechend kann es sich bei der Filtrationsanlage vorzugsweise um eine Ultrafiltrationsanlage handeln.

Bei dem Wasserfilter kann es sich beispielsweise um einen Hohlfasermembranfilter handeln. Ein Hohlfasermembranfilter umfasst ein Bündel aus Hohlfasern, durch die das Wasser auf dem Weg vom Filter-Eingang zum Retentat-Ausgang geleitet wird. Die Wandungen der Hohlfasern weisen eine Vielzahl kleiner Poren auf, durch die ein Teil des Wassers hindurchdringt und zum Filtrat-Ausgang gelangt, während Verunreinigungen in den Hohlfasern zurückbleiben und mit dem übrigen Wasser zum Retentat-Ausgang geleitet werden. Die inneren Wandungen der Hohlfasern stellen somit das Filtermaterial, genauer die Filtermembran des Hohlfasermembranfilters dar.

Die Filtrationsanlage weist weiter einen Ablasspunkt zum Ablassen von Wasser aus der Filtrationsanlage auf. Am Ablasspunkt kann insbesondere eine Entnahmestelle vorgesehen sein, an der Wasser aus dem Leitungssystem abgelassen werden kann. Das Ablassen des Wassers erfolgt am Ablasspunkt insbesondere unter Druckabfall, beispielsweise durch Auslassen des Wassers über einen freien Auslauf in ein Spülbecken oder einen Siphon.

Vorzugsweise ist im Leitungssystem ein steuerbares Ablassventil vorgesehen, mit dem das Ablassen von Wasser aus der Filtrationsanlage am Ablasspunkt gesteuert werden kann. Bei dem Ablassventil handelt es sich vorzugsweise um ein Magnetventil. Dies ermöglicht ein stoßweises Spülen unter schnellem Öffnen und Schließen des Ablassventils.

Die Filtrationsanlage weist weiter ein Leitungssystem auf, wobei das Leitungssystem den Einleitungspunkt mit dem Filter-Eingang verbindet, den Filtrat-Ausgang mit dem Ausleitungspunkt verbindet und den Retentat-Ausgang mit dem Filter-Eingang und mit dem Ablasspunkt verbindet. Das Leitungssystem kann den Einleitungspunkt mit dem Filter-Eingang, den Filtrat-Ausgang mit dem Ausleitungspunkt bzw. den Retentat-Ausgang mit dem Filter-Eingang und dem Ablasspunkt beispielsweise jeweils direkt, zum Beispiel über eine jeweilige gesonderte Leitung mit ggf. darin integrierten weiteren Komponenten wie Pumpe, Rückflussverhinderer, Ventil etc., oder auch indirekt, insbesondere über mehrere Leitungen, verbinden. Das Leitungssystem kann beispielsweise eine Vorlaufleitung aufweisen, die den Einleitungspunkt mit dem Filter-Eingang verbindet. Das Leitungssystem kann weiter beispielsweise eine Filtratleitung aufweisen, die den Filtrat-Ausgang mit dem Ausleitungspunkt verbindet. Das Leitungssystem kann weiter beispielsweise eine Rückführleitung aufweisen, die den Retentat-Ausgang mit der Vorlaufleitung (indirekte Verbindung vom Retentat-Ausgang zum Filter-Eingang) oder mit dem Filter-Eingang (direkte Verbindung vom Retentat-Ausgang zum Filter-Eingang) verbindet. Ist in der Vorlaufleitung eine Pumpe vorgesehen, so mündet die Rückführleitung vorzugsweise zwischen Filter-Eingang und Pumpe in die Vorlaufleitung. Das Leitungssystem kann weiter beispielsweise eine Ablassleitung aufweisen, die den Retentat-Ausgang mit dem Ablasspunkt (direkte Verbindung vom Retentat-Ausgang zum Ablasspunkt) oder die Rückführleitung mit dem Ablasspunkt (indirekte Verbindung vom Retentat-Ausgang zum Ablasspunkt) verbindet.

Die Filtrationsanlage kann vorzugsweise in einem Filtrationsbetrieb betrieben werden, bei dem Wasser über den Einleitungspunkt in die Filtrationsanlage eingeleitet und mit dem Wasserfilter gefiltertes Wasser (Filtrat) über den Ausleitungspunkt aus der Filtrationsanlage herausgeführt wird.

An der Filtrationsanlage kann weiter vorzugsweise ein Vorwärtsspülvorgang durchgeführt werden. Bei einem Vorwärtsspülvorgang wird Wasser über den Filter-Eingang in den Wasserfilter eingeleitet und aus dem Retentat-Ausgang fließendes Wasser über den Ablasspunkt aus der Filtrationsanlage abgelassen.

An der Filtrationsanlage kann weiter vorzugsweise ein Rückspülvorgang durchgeführt werden. Bei einem Rückspülvorgang wird Wasser über den Filtrat-Ausgang in den Wasserfilter eingeleitet und aus dem Retentat-Ausgang fließendes Wasser über den Ablasspunkt aus der Filtrationsanlage abgelassen.

Insbesondere kann eine Steuereinrichtung zur Steuerung der Filtrationsanlage vorgesehen sein, die den Filtrationsbetrieb und/oder die Durchführung eines Vorwärtsspülvorgangs und/oder die Durchführung eines Rückspülvorgangs steuert.

Der gemäß dem ersten Aspekt vorgesehene Retentat-Ausgangs-Sensor ermöglicht eine bessere Überwachung der Filtrationsanlage, insbesondere während eines Spülvorgangs, zum Beispiel während eines Rückspülvorgangs.

Der Retentat-Ausgangs-Sensor kann insbesondere in die Rückführleitung und/oder in die Ablassleitung integriert werden. Zweigt die Ablassleitung von der Rückführleitung ab, so ist der Retentat-Ausgangs-Sensor vorzugsweise zwischen dem Retentat-Ausgang und dem Abzweig der Ablassleitung in die Rückführleitung integriert. Der Retentat-Ausgangs-Sensor kann auch zweiteilig mit einem ersten Sensorteil in der Rückführleitung und einem zweiten Sensorteil in der Ablassleitung ausgebildet sein, um Volumenstrom, Druck und/oder Temperatur in Rückführleitung und Ablassleitung zu messen, zum Beispiel wenn die Ablassleitung nicht an die Rückführleitung, sondern parallel zur Rückführleitung direkt an den Retentat-Auslass angeschlossen ist.

Vorzugsweise handelt es sich bei dem Retentat-Ausgangs-Sensor um einen Volumenstromsensor. Auf diese Weise kann der aus dem Retentat-Ausgang austretende Volumenstrom, insbesondere während eines Rückspülvorgangs, unmittelbar überwacht werden.

Der Retentat-Ausgangs-Sensor ist vorzugsweise derart mit einer vorgesehenen Steuereinrichtung verbunden, dass die Steuereinrichtung Messwerte des Retentat-Ausgangs-Sensors erhält. Auf diese Weise kann die Filtrationsanlage überwacht und/oder gesteuert werden.

Beispielsweise kann vorgesehen sein, dass die Steuereinrichtung abhängig von den Messwerten des Retentat-Ausgangs-Sensors einen Spülbetriebszustand erfasst. Zum Beispiel kann die Steuereinrichtung abhängig von den Messwerten des Retentat-Ausgangs-Sensors bestimmen, ob ein Spülvorgang, insbesondere ein Vorwärts- oder Rückspülvorgang, gemäß vorgegebener Anforderungen, wie zum Beispiel einem vorgegebenen Minimalspülwasservolumen, durchgeführt werden.

So kann mit dem Retentat-Ausgangs-Sensor beispielsweise festgestellt werden, wenn während eines Rückspülvorgangs kein für die Rückspülung ausreichender Wasserfluss mehr aus dem Retentat-Ausgang austritt. Weiterhin kann der Volumenstrom beim Rückspülvorgang genau erfasst werden, so dass zum Beispiel eine bessere Protokollierung und/oder Kontrolle der ordnungsgemäßen Spülung ermöglicht wird. Darüber hinaus kann mit dem Retentat-Ausgangs-Sensor auch erkannt werden, ob während eines Rückspülvorgangs Volumenstrom vorhanden ist oder nicht. Ein fehlender Volumenstrom kann auf einen Fehler in der Filtrationsanlage hindeuten.

Weiterhin können über die Steuereinrichtung auf diese Weise die Spülvolumina von Spülvorgängen erfasst und vorzugsweise protokolliert werden.

Die Steuereinrichtung kann insbesondere die Funktion eines Überwachungssystems übernehmen. Vorzugsweise ermöglicht die Steuereinrichtung einen Zugriff auf die Messwerte des Retentat-Ausgangs-Sensors im Fernzugriff. Auf diese Weise ist eine Remote-Überwachung der Filtrationsanlage möglich. Weiterhin sind der Retentat-Ausgangs-Sensor bzw. dessen Messwerte vorzugsweise in ein Fehler-Management des Überwachungssystems eingebunden.

Vorzugsweise ist die Steuereinrichtung zur Steuerung der Filtrationsanlage abhängig von den Messwerten des Retentat-Ausgangs-Sensors eingerichtet. Besonders bevorzugt wird ein Spülvorgang, insbesondere ein Vorwärtspülvorgang oder ein Rückspülvorgang, abhängig von den Messwerten des Retentat-Ausgangs-Sensors gesteuert. Beispielsweise kann mit den Messwerten des Retentat-Ausgangs-Sensors das tatsächliche, während eines Spülvorgangs durch den Retentat-Ausgang fließende Spülvolumen ermittelt und der Spülvorgang abhängig von dem ermittelten Spülvolumen gesteuert werden, beispielsweise beendet werden, wenn ein vorgegebenes Spülvorgangs-Spülvolumen erreicht wurde. Auf diese Weise wird eine kontrollierte Durchführung des Spülvorgangs ermöglicht und zudem sichergestellt, dass der Wasserfilter bei dem Spülvorgang mit ausreichend Spülvolumen gespült wurde. Darüber hinaus kann durch eine solche Steuerung bei einem Rückspülvorgang zuverlässiger verhindert werden, dass der Wasserfilter mit Wasser aus dem Trinkwasserleitungssystem rückgespült wird, an das die Filtrationsanlage am Ausleitungspunkt angeschlossen ist. Entsprechend ist die Steuereinrichtung vorzugsweise dazu eingerichtet, einen Rückspülvorgang abhängig von den Messwerten des Retentat-Ausgangs-Sensors zu steuern, insbesondere den Rückspülvorgang abhängig von den Messwerten des Retentat-Ausgangs-Sensors zu beenden. Auf diese Weise kann bereits durch die Steuerung des Rückspülvorgangs erreicht werden, dass der Rückspülvorgang mit Wasser im hygienisch unbedenklichen Zustand durchgeführt wird.

Entsprechend wird vorzugsweise ein laufender Spülvorgang, insbesondere ein laufender Vorwärtsspülvorgang oder ein laufender Rückspülvorgang, beendet, wenn die unter Verwendung des Retentat-Ausgangs-Sensors gemessenen Messwerte ergeben, dass während des laufenden Spülvorgangs ein vorgegebenes Spülvorgangs-Spülwasservolumen aus dem Retentat-Ausgang ausgetreten ist.

Die Steuereinrichtung kann auch dazu eingerichtet sein, den Filtrationsbetrieb der Filtrationsanlage abhängig von den Messwerten des Retentat-Ausgangs-Sensors zu steuern. Beispielsweise kann die Pumpenleistung einer vorgesehenen Pumpe, insbesondere einer dem Wasserfilter vorgeschalteten Pumpe, im Filtrationsbetrieb abhängig von den Messwerten des Retentat-Ausgangs-Sensors gesteuert werden. Auf diese Weise ist eine Nachregelung bzw. Leistungserhöhung der Pumpe bei sich zusetzendem Wasserfilter möglich. Eine solche Regelung ermöglicht es umgekehrt, die Pumpe zu Beginn nur auf ein minimal erforderliches Leistungsniveau einzustellen, da deren Leistung dann abhängig vom Filterzustand erhöht wird. Auf diese Weise ist ein energieeffizienterer Betrieb möglich, als wenn die Pumpe von vornherein auf einem höheren Leistungsniveau für einen teilweise zugesetzten Wasserfilter laufen würde.

Die Messwerte des Retentat-Ausgangs-Sensors können für die Überwachung und/oder Steuerung grundsätzlich allein oder auch in Kombination mit den Messwerten anderer Sensoren, wie anderer Volumenstrom-, Druck- und/oder Temperatursensoren, verwendet werden.

Durch das Vorsehen des Retentat-Ausgangs-Sensors kann auf diese Weise die hygienische Sicherheit der Filtrationsanlage erhöht werden. Weiterhin können Fehlerzustände genauer und früher erkannt werden als mit der bisher umgesetzten Technik.

Bei dem gemäß dem zweiten Aspekt vorgesehenen Wasserspeicher kann es sich gemäß einer ersten Variante des zweiten Aspekts um einen Durchlauf-Wasserspeicher handeln. Durch den Durchlauf-Wasserspeicher wird das Filtratvolumen zwischen dem Filtrat-Ausgang und dem Ausleitungspunkt erhöht, so dass für einen Rückspülvorgang ein größeres Filtratvolumen zur Verfügung steht, das durch den Filtrat-Ausgang in den Wasserfilter eingeleitet werden kann. Auf diese Weise kann auch verhindert werden, dass über den Ausleitungspunkt eintretendes Wasser aus der angeschlossenen Trinkwasserleitung bis zum Wasserfilter gelangt.

Der Durchlauf-Wasserspeicher weist vorzugsweise ein größeres Wasservolumen auf als ein vorgegebenes Spülwasservolumen, mit dem der Wasserfilter während eines Rückspülvorgangs durchspült wird.

Besonders bevorzugt ist eine Kombination eines Durchlauf-Wasserspeichers gemäß dem zweiten Aspekt mit einem Retentat-Ausgangs-Sensor gemäß dem ersten Aspekt. Auf diese Weise kann beispielsweise die Durchführung eines Rückspülvorgangs derart gesteuert werden, dass der Rückspülvorgang beendet wird, bevor oder wenn ein dem Fassungsvermögen des Durchlauf-Wasserspeichers entsprechendes Spülvolumen den Retentat-Ausgang passiert hat. Auf diese Weise kann das Risiko reduziert werden, dass beim Rückspülvorgang über den Ausleitungspunkt in die Filtrationsanlage einströmendes Wasser in nennenswertem Umfang zum Filtrat-Ausgang gelangt.

Der Durchlauf-Wasserspeicher kann beispielsweise durch einen Leitungsabschnitt gebildet werden, der einen gegenüber einer davor und dahinter angeschlossenen Leitung des Leitungssystems vergrößerten Rohrleitungsquerschnitt aufweist. Auf diese Weise kann bei vorgegebener Leitungslänge ein größeres Wasservolumen gespeichert werden. Zudem weist ein solcher Durchlauf-Wasserspeicher eine recht kurze Baulänge und eine einfache Konstruktion auf, wodurch dieser kostengünstig und platzsparend ist.

Der Durchlauf-Wasserspeicher kann weiter beispielsweise durch einen Leitungsabschnitt gebildet werden, der zur Verlängerung der Leitungslänge des Leitungsabschnitts, insbesondere zur Vergrößerung des Leitungsvolumens, gewunden ist, beispielsweise spiralartig ausgebildet ist, mehrere Biegungen aufweist und/oder Zick-zack-förmig ausgebildet ist. Ein Beispiel für einen solchen Durchlauf-Wasserspeicher ist ein Rohrwendelspeicher. Ein solcher Rohrwendelspeicher umfasst einen spiralartig aufgewickelten Leitungsabschnitt.

Durch eine derartige Ausgestaltung des Durchlauf-Wasserspeichers kann bei vorgegebenem Abstand zwischen Anfang und Ende des Durchlauf-Wasserspeichers ein größeres Wasservolumen gespeichert werden. Durch die größere Leitungslänge zwischen dem Anfang und Ende des Durchlauf-Wasserspeichers, insbesondere im Verhältnis zum Leitungsdurchmesser des Leitungsabschnitts, kann ein Vermischen von Filtrat und von über den Ausleitungspunkt rückströmendem Wasser, beispielsweise gegenüber einem Durchlauf-Wasserspeicher mit lediglich vergrößertem Rohrleitungsquerschnitt, besser vermieden werden. Entsprechend weist der Leitungsabschnitt eines solchen Durchlauf-Wasserspeichers vorzugsweise einen gegenüber einer davor und/oder dahinter angeschlossenen Leitung des Leitungssystems gleichen oder geringeren Rohrleitungsquerschnitt auf.

Zwischen dem Durchlauf-Wasserspeicher und dem Ausleitungspunkt ist vorzugsweise kein Rücklaufverhinderer vorgesehen. Auf diese Weise kann beim Rückspülvorgang über den Ausleitungspunkt in die Filtrationsanlage fließendes Wasser das im Durchlauf-Wasserspeicher gespeicherte Filtrat vor sich her zum Filtrat-Ausgang drücken.

Bei dem gemäß dem zweiten Aspekt vorgesehenen Wasserspeicher kann es sich gemäß einer zweiten Variante des zweiten Aspekts um einen Aktiv-Wasserspeicher mit einem ansteuerbaren Wasserspeicher-Aktuator handeln, wobei in dem Aktiv-Wasserspeicher enthaltenes Wasser durch Ansteuerung des Wasserspeicher-Aktuators aus dem Aktiv-Wasserspeicher in Richtung des Filtrat-Ausgangs geleitet werden kann. Mit dem Aktiv-Wasserspeicher kann bei einem Rückspülvorgang eine ausreichende Menge Filtrat zum Rückspülen des Wasserfilters mit Filtrat bereitgestellt werden. Gegenüber einem Membranausdehnungsgefäß ist ein solcher Aktiv-Wasserspeicher für häufigere und schnellere Druckänderungen beim Rückspülvorgang ausgelegt, so dass Wartungsintervalle verlängert werden können. Zudem kann mit einem Aktiv-Wasserspeicher durch entsprechende Ansteuerung des Wasserspeicher-Aktuators Filtrat impulsartig zur Verfügung gestellt werden, so dass das Filtrat impulsartig durch die Filtermembran des Wasserfilters gedrückt wird und eine effektivere Filterung bewirkt.

Bei dem gemäß dem zweiten Aspekt vorgesehenen Wasserspeicher kann es sich gemäß einer dritten Variante des zweiten Aspekts um einen Federdruck-Wasserspeicher mit einem federbelasteten beweglichen Element handeln, wobei das Wasservolumen des Federdruck-Wasserspeichers bei Erhöhung des Wasserdrucks durch Bewegung des beweglichen Elements steigt. Gegenüber einem Membranausdehnungsgefäß ist ein Federdruck-Wasserspeicher besser auf häufigere und schnellere Druckwechsel eingerichtet, so dass die Wartungsintervalle verlängert werden können. Insbesondere kann der Federdruck-Wasserspeicher ein zylinderförmiges Wasserreservoir mit einem darin beweglich angeordneten, federbelasteten Kolben aufweisen, der eine Seite des Wasserreservoirs bildet.

Die Federkraft kann derart gewählt werden, dass das bewegliche Element, insbesondere der Kolben, eine geringere Austriebskraft, insbesondere Kolbenkraft, bewirkt als die Gegenkraft durch den Betriebsdruck des Trinkwassers zwischen dem Filtrat-Ausgang und dem Ausleitungspunkt während des Filtrationsbetriebs. Auf diese Weise füllt sich der Federdruck-Wasserspeicher während des Filtrationsbetriebs mit Filtrat, das dann bei dem Wasserdruckabfall während des Rückspülvorgangs durch die Austriebskraft, insbesondere Kolbenkraft, aus dem Federdruck-Wasserspeicher in Richtung Filtrat-Ausgang des Wasserfilters geleitet wird.

Alternativ kann die Federkraft auch derart gewählt werden, dass das bewegliche Element, insbesondere der Kolben, eine größere Austriebskraft, insbesondere Kolbenkraft, bewirkt als die Gegenkraft durch den Betriebsdruck des Trinkwassers zwischen dem Filtrat-Ausgang und dem Ausleitungspunkt während des Filtrationsbetriebs. Auf diese Weise ist der Federdruck-Wasserspeicher während des Filtrationsbetriebs leer oder nur mit einer geringen Menge Filtrat gefüllt, so dass Stagnationswasser vermieden wird. Für einen Rückspülvorgang wird eine Filtrationsanlage mit einem solchen Federdruck-Wasserspeicher vorzugsweise so gesteuert, dass vor dem Beginn des Rückspülvorgangs der Betriebsdruck erhöht wird, beispielsweise durch Erhöhung der Leistung einer vorgesehenen Pumpe, insbesondere eine vor dem Filter-Eingang vorgesehene Pumpe, so dass sich der Federdruck-Wasserspeicher mit Filtrat füllt. Für den Rückspülvorgang wird dann der Betriebsdruck wieder abgesenkt, beispielsweise durch eine Leistungssenkung oder Ausschalten der Pumpe, Verschließen eines Einleitungsventils und/oder Öffnen eines Ablassventils, so dass das Filtrat aus dem Federdruck-Wasserspeicher in Richtung Filtrat-Ausgang geleitet wird.

Vorzugsweise weist die Filtrationsanlage gemäß dem ersten und/oder zweiten Aspekt zwischen dem Filtrat-Ausgang und dem Ausleitungspunkt kein Membranausdehnungsgefäß mit einer elastischen Membran auf, die ein mit dem Leitungssystem verbundenes Wasserreservoir von einem Gaspolster-Bereich trennt. Durch die Verwendung eines Aktiv-Wasserspeichers, eines Federdruck-Wasserspeichers oder eines Durchlauf-Wasserspeichers wird ein solches Membranausdehnungsgefäß, das die einleitend beschriebenen Nachteile aufweist, zur Verfügungstellung von Filtrat für den Rückspülvorgang entbehrlich. Weiterhin kann auch beim Vorsehen eines Retentat-Ausgangs-Sensors auf ein solches Membranausdehnungsgefäß verzichtet werden, da die Überwachung eines Rückspülvorgangs über den Retentat-Ausgangs-Sensor es ermöglicht, den Rückspülvorgang auch ohne vorgesehenes Wasserreservoir für das Filtrat rechtzeitig zu beenden, bevor Wasser aus der Trinkwasserleitung, an die die Filtrationsanlage angeschlossen ist, vom Ausleitungspunkt zum Filtrat-Ausgang gelangt.

Die zuvor genannte Aufgabe wird erfindungsgemäß weiterhin gelöst durch ein Trinkwasserleitungssystem mit einer Trinkwasserleitung, insbesondere einer Warmwasser-Zirkulationsleitung, und der zuvor beschriebenen Filtrationsanlage oder einer Ausführungsform davon, wobei die Filtrationsanlage mit ihrem Einleitungspunkt und ihrem Ausleitungspunkt an die Trinkwasserleitung angeschlossen ist.

Die zuvor genannte Aufgabe wird erfindungsgemäß weiterhin gelöst durch ein Verfahren zur Steuerung der zuvor beschriebenen Filtrationsanlage oder einer Ausführungsform davon oder des zuvor beschriebenen Trinkwasserleitungssystems oder einer Ausführungsform davon.

Gemäß dem ersten Aspekt werden bei dem Verfahren während eines Filtrationsbetriebs der Filtrationsanlage, während eines Vorwärtsspülvorgangs der Filtrationsanlage und/oder während eines Rückspülvorgangs der Filtrationsanlage unter Verwendung des Retentat-Ausgangs-Sensors Messwerte für den Volumenstrom, den Druck und/oder die Temperatur des aus dem Retentat-Ausgang austretenden Wassers gemessen.

Zusätzlich oder alternativ wird gemäß dem zweiten Aspekt, wenn die Filtrationsanlage einen Aktiv-Wasserspeicher aufweist, bei dem Verfahren während eines Rückspülvorgangs der Filtrationsanlage der Wasserspeicher-Aktuator derart angesteuert, dass in dem Aktiv-Wasserspeicher enthaltenes Wasser aus dem Aktiv-Wasserspeicher in Richtung Filtrat-Ausgang geleitet wird.

Zusätzlich oder alternativ wird gemäß dem zweiten Aspekt, wenn die Filtrationsanlage einen Federdruck-Wasserspeicher aufweist, bei dem Verfahren der Wasserdruck am Federdruck-Wasserspeicher vor einem Rückspülvorgang so eingestellt, dass sich der Federdruck-Wasserspeicher mit Wasser füllt, und wird während eines Rückspülvorgangs so eingestellt, dass Wasser aus dem Federdruck-Wasserspeicher herausgedrückt und in Richtung des Filtrat-Ausgangs geleitet wird. Die Einstellung des Wasserdrucks am Federdruck-Wasserspeicher, kann zum Beispiel durch Ansteuerung einer Pumpe der Filtrationsanlage und/oder eines Ventils, insbesondere Ablassventils, der Filtrationsanlage bewirkt werden.

Die zuvor genannte Aufgabe wird erfindungsgemäß weiterhin gelöst durch ein Computerprogramm, aufweisend Befehle, deren Ausführung durch eine Steuereinrichtung der zuvor beschriebenen Filtrationsanlage oder einer Ausführungsform davon die Steuerung der Filtrationsanlage entsprechend des zuvor beschriebenen Verfahrens oder einer Ausführungsform davon bewirkt. Beispielsweise kann die Steuereinrichtung der Filtrationsanlage einen oder mehrere Mikroprozessoren und ein oder mehrere Speicher mit dem Computerprogramm aufweisen, wobei die Ausführung der Befehle auf den ein oder mehreren Mikroprozessoren der Steuereinrichtung die Ausführung des zuvor beschriebenen Verfahrens oder einer Ausführungsform davon bewirkt.

Im Folgenden werden verschiedene Ausführungsformen der Filtrationsanlage, des Trinkwasserleitungssystems, des Verfahrens und des Computerprogramms beschrieben, wobei die einzelnen Ausführungsformen jeweils unabhängig voneinander für die Filtrationsanlage, das Trinkwasserleitungssystem, das Verfahren und das Computerprogramm gelten. Darüber hinaus können die einzelnen Ausführungsformen beliebig miteinander kombiniert werden. Weiterhin können der zuvor beschriebene erste Aspekt und der zuvor beschriebene zweite Aspekt miteinander kombiniert werden.

Bei einer Ausführungsform ist im Leitungssystem der Filtrationsanlage ein steuerbares Eingangs-Ventil zwischen dem Einleitungspunkt und dem Filter-Eingang vorgesehen, insbesondere in der Vorlaufleitung. Weist das Leitungssystem eine in die Vorlaufleitung mündende Rückführleitung auf, so ist das Eingangs-Ventil vorzugsweise zwischen Einleitungspunkt und Einmündung der Rückführleitung angeordnet. Mit dem Eingangs-Ventil kann der Wasserfluss über den Einleitungspunkt in die Filtrationsanlage gesteuert werden. Insbesondere kann das Eingangs-Ventil für die Durchführung eines Rückspülvorgangs geschlossen werden.

Bei einer weiteren Ausführungsform ist im Leitungssystem ein Eingangs-Volumenstromsensor zwischen dem Einleitungspunkt und dem Filter-Eingang vorgesehen, insbesondere in der Vorlaufleitung. Weist das Leitungssystem eine in die Vorlaufleitung mündende Rückführleitung auf, so ist der Eingangs-Volumenstromsensor vorzugsweise zwischen Einleitungspunkt und Einmündung der Rückführleitung angeordnet. Mit dem Eingangs-Volumenstromsensor kann die über den Einleitungspunkt in die Filteranlage eingeleitete Wassermenge überwacht werden.

Bei einer Ausführungsform ist im Leitungssystem eine Pumpe zwischen dem Einleitungspunkt und dem Filter-Eingang vorgesehen. Weist das Leitungssystem eine in die Vorlaufleitung mündende Rückführleitung auf, so ist die Pumpe vorzugsweise zwischen der Einmündung der Rückführleitung und dem Filter-Eingang angeordnet. Mit der Pumpe können der Wasserdruck und/oder der Volumenstrom für die Filterung im Wasserfilter angepasst werden.

Bei einer Ausführungsform ist im Leitungssystem vor dem Filter-Eingang ein Drucksensor vorgesehen, vorzugsweise zwischen einer vorgesehenen Pumpe und dem Filter-Eingang. Auf diese Weise kann der Eingangsdruck des Wasserfilters überwacht werden. Vorzugsweise wird die Pumpe abhängig von dem am Drucksensor gemessenen Druck gesteuert, beispielsweise mit der Steuereinrichtung.

Bei einer Ausführungsform ist im Leitungssystem ein steuerbares Filtrat-Ventil zwischen dem Filtrat-Ausgang und dem Ausleitungspunkt vorgesehen, insbesondere in der Filtratleitung. Das Filtrat-Ventil weist vorzugsweise eine Probenahmeeinrichtung auf, die es ermöglicht Filtrat-Proben zu deren Analyse zu entnehmen.

Bei einer Ausführungsform ist im Leitungssystem ein Filtrat-Rückflussverhinderer zwischen dem Filtrat-Ausgang und dem Ausleitungspunkt vorgesehen, der ein Rückströmen von Wasser aus dem Ausleitungspunkt zum Filtrat-Ausgang verhindert.

Ein solcher Filtrat-Rückflussverhinderer kann insbesondere vorgesehen sein, wenn gemäß der zweiten oder dritten Variante des zweiten Aspektes ein Aktiv-Wasserspeicher oder ein Federdruck-Wasserspeicher vorgesehen ist, durch die Filtratvolumen für die Durchführung eines Rückspülvorgangs bereitgestellt wird.

Durch einen solchen Filtrat-Rückflussverhinderer kann ein Vermischen des Filtrats mit über den Ausleitungspunkt in die Filtrationsanlage einströmendem Wasser technisch ausgeschlossen werden.

Bei einer Ausführungsform ist eine Steuereinrichtung vorgesehen, die dazu eingerichtet ist, eine Steuerung der Filtrationsanlage gemäß dem zuvor beschriebenen Verfahren oder einer Ausführungsform davon zu bewirken. Bei der Steuereinrichtung der Filtrationsanlage kann es sich auch um eine übergeordnete Steuereinrichtung, wie zum Beispiel um die Steuereinrichtung eines Trinkwasserleitungssystems handeln, in die die Filtrationsanlage integriert ist.

Bei einer Ausführungsform ist eine Steuereinrichtung vorgesehen, die dazu eingerichtet ist, einen Filtrationsbetrieb, eine Vorwärtsspülvorgang und/oder einen Rückspülvorgang abhängig von mit dem Retentat-Ausgangs-Sensor gemessenen Messwerten zu steuern. Auf diese Weise kann zum Beispiel ein Spülvorgang, insbesondere Vorwärts- oder Rückspülvorgang, abhängig vom tatsächlichen Spülvolumen durch den Wasserfilter durchgeführt werden, beispielsweise beendet werden, wenn ein vorgegebenes Spülvolumen erreicht wurde.

Weiterhin kann beispielsweise die Leistung der Pumpe während des Filtrationsbetrieb angepasst werden, so dass der Volumenstrom durch den Filtrat- und Retentat-Ausgang im Wesentlichen konstant bleibt. Auf diese Weise kann einem Zusetzen des Filtermaterials durch Änderung der Pumpenleistung entgegengewirkt werden.

Entsprechend kann eine Pumpe der Filtrationsanlage während des Filterbetriebs vorzugsweise abhängig von den unter Verwendung des Retentat-Ausgangs-Sensors gemessenen Messwerten gesteuert werden, insbesondere derart, dass der Volumenstrom durch den Retentat-Ausgang in einem vorgegebenen Sollbereich bleibt.

Bei einer Ausführungsform weist der Aktiv-Wasserspeicher ein durch Ansteuerung des Wasserspeicher-Aktuators veränderbares Fassungsvermögen auf. Der Aktiv-Wasserspeicher kann beispielsweise einen beweglichen Kolben oder eine bewegliche Membran aufweisen, der oder die ein an das Leitungssystem angeschlossenes Wasserreservoir begrenzt, dessen Fassungsvermögen durch Bewegung des Kolbens bzw. der Membran verändert werden kann. Beispielsweise kann der Aktiv-Wasserspeicher ein zylinderförmiges Wasserreservoir mit einem darin beweglichen Kolben aufweisen, der eine bewegliche Wand des Wasserreservoirs bildet.

Der Aktiv-Wasserspeicher kann einen Anschluss aufweisen, mit dem der Aktiv-Wasserspeicher zwischen dem Filtrat-Ausgang und dem Ausleitungspunkt an das Leitungssystem angeschlossen ist.

Vorzugsweise wird der Wasserspeicher-Aktuator derart angesteuert, insbesondere von der Steuereinrichtung, dass das Fassungsvermögen des Aktiv-Wasserspeichers während eines Filtrationsbetriebs einem Minimalvolumen, vorzugsweise von Null, entspricht. Vor Beginn eines Rückspülvorgangs wird der Wasserspeicher-Aktuator vorzugsweise derart angesteuert, dass sich das Fassungsvermögen vergrößert, so dass sich der Aktiv-Wasserspeicher mit frischem Filtrat füllt. Während des Rückspülvorgangs wird der Wasserspeicher-Aktuator vorzugsweise weiter derart angesteuert, dass sich das Fassungsvermögen wieder verringert, so dass das Filtrat aus dem Aktiv-Wasserspeicher in Richtung Filtrat-Ausgang geleitet wird. Auf diese Weise kann Stagnationswasser im Aktiv-Wasserspeicher vermieden werden.

Entsprechend wird der Wasserspeicher-Aktuator vorzugsweise derart angesteuert, dass das Fassungsvermögen des Aktiv-Wasserspeichers während eines laufenden Filtrationsbetriebs einem Minimalvolumen entspricht und vor Beginn eines Rückspülvorgangs vergrößert wird, so dass sich der Aktiv-Wasserspeicher vor Beginn des Rückspülvorgangs füllt.

Bei häufigen Rückspülvorgängen kann der Wasserspeicher-Aktuator alternativ auch derart angesteuert werden, dass sich der Aktiv-Wasserspeicher nach dem Ende eines Rückspülvorgangs und Beginn des Filtrationsbetriebs unmittelbar wieder mit frischem Wasser füllt.

Bei einer Ausführungsform ist der Aktiv-Wasserspeicher derart an das Leitungssystem angeschlossen, dass der Aktiv-Wasserspeicher im Filtrationsbetrieb von im Leitungssystem fließendem Wasser durchströmt wird, insbesondere von einem Aktiv-Wasserspeicher-Eingang des Aktiv-Wasserspeichers zu einem Aktiv-Wasserspeicher-Ausgang des Aktiv-Wasserspeichers. Auf diese Weise wird Stagnationswasser im Aktiv-Wasserspeicher vermieden.

Vorzugsweise ist der Aktiv-Wasserspeicher dazu eingerichtet, den Aktiv-Wasserspeicher-Ausgang bei einem Rückspülvorgang zu verschließen, so dass das im Aktiv-Wasserspeicher gespeicherte Filtrat den Aktiv-Wasserspeicher durch den Aktiv-Wasserspeicher-Eingang in Richtung Filtrat-Ausgang verlässt.

Der Aktiv-Wasserspeicher kann beispielsweise ein zylinderförmiges Wasserreservoir mit einem darin beweglichen Kolben aufweisen, durch dessen Bewegung die Größe des Wasserreservoirs verändert werden kann. Der Aktiv-Wasserspeicher-Ausgang ist vorzugsweise so angeordnet und der Kolben so ausgebildet, dass der Kolben den Aktiv-Wasserspeicher-Ausgang verschließt, wenn der Kolben so bewegt wird, dass er das Fassungsvermögen des Wasserreservoirs reduziert, insbesondere bei einem Rückspülvorgang. Der Wasserspeicher-Aktuator kann insbesondere einen Antrieb wie zum Beispiel einen Motor aufweisen, der den Kolben antreibt.

Der Aktiv-Wasserspeicher kann beispielsweise auch ein Wasserreservoir aufweisen, wobei eine Wand des Wasserreservoirs durch eine elastische Membran oder einen Kolben gebildet wird, wobei ein durch die Membran oder den Kolben von dem Wasserreservoir getrennter Aktuatordruckraum durch Ansteuerung des Wasserspeicher-Aktuators mit einem Druck beaufschlagt werden kann, insbesondere mit Wasserdruck durch Einleiten von Wasser, so dass sich die elastische Membran verformt oder der Kolben bewegt und die Größe des Wasserreservoirs verändert.

Am Wasserreservoir sind vorzugsweise ein Aktiv-Wasserspeicher-Eingang und ein Aktiv-Wasserspeicher-Ausgang vorgesehen, so dass das Wasserreservoir während des Filterbetriebs durchströmt werden kann. Auf diese Weise wird Stagnationswasser im Wasserreservoir vermieden und zudem der Kontakt mit der elastischen Membran minimiert. Daher ist ein solcher Aktiv-Wasserspeicher mit Membran insbesondere auch vorteilhaft gegenüber einem konventionell angeschlossenen Membranausdehnungsgefäß.

Am Aktuatordruckraum sind vorzugsweise ein Aktuator-Eingang, durch den unter Druck stehendes Wasser in den Aktuatordruckraum eingeleitet werden kann, sowie ein Aktuator-Ausgang, durch den das Wasser aus dem Aktuatordruckraum ausgeleitet werden kann. Der Wasserspeicher-Aktuator kann beispielsweise steuerbare Ventile am Aktuator-Eingang und Aktuator-Ausgang aufweisen, um das Ein- und Ausleiten von Wasser in den Aktuatordruckraum zu steuern.

Eine Filtrationsanlage mit einem solchen Aktiv-Wasserspeicher wird vorzugsweise derart gesteuert, dass während des Filtrationsbetriebs im Aktuatordruckraum ein geringer Druck herrscht, so dass der Aktiv-Wasserspeicher ein vorgegebenes großes Fassungsvermögen aufweist. Weiter wird die Filtrationsanlage für die Durchführung eines Rückspülvorgangs vorzugsweise so gesteuert, dass vorzugsweise vor Beginn eines Rückspülvorgangs der Aktiv-Wasserspeicher-Ausgang geschlossen wird und während des Rückspülvorgangs der Aktuatordruckraum mit Druck beaufschlagt wird, insbesondere durch Schließen des Aktuator-Ausgangs und Öffnen des Aktuator-Eingangs, und das Ablassventil geöffnet wird, so dass das Filtrat aus dem Aktiv-Wasserspeicher in Richtung Filtrat-Ausgang geleitet wird. Weiter wird die Filtrationsanlage vorzugsweise so gesteuert, dass nach dem Rückspülvorgang der Aktuator-Eingang geschlossen und der Aktuator-Ausgang geöffnet wird, so dass sich der Aktuatordruckraum leert und sich der Aktiv-Wasserspeicher wieder mit Filtrat füllt.

Zwischen dem Aktiv-Wasserspeicher und dem Ausleitungspunkt ist vorzugsweise ein Filtrat-Rückflussverhinderer vorgesehen.

Bei einer Ausführungsform ist die Filtrationsanlage in Reihe an die Trinkwasserleitung des Trinkwasserleitungssystems angeschlossen. Die Trinkwasserleitung wird demnach durch die Filtrationsanlage unterbrochen und weist einen ersten Abschnitt bis zum Einleitungspunkt und einen zweiten Abschnitt ab dem Ausleitungspunkt auf. Auf diese Weise kann der gesamte in der Trinkwasserleitung geführte Wasserstrom durch die Filtrationsanlage geführt und somit gefiltert werden.

Bei einer Ausführungsform ist die Filtrationsanlage zu einem Abschnitt der Trinkwasserleitung des Trinkwasserleitungssystems parallel angeschlossen. Zu diesem Zweck kann die Trinkwasserleitung vor und hinter dem Abschnitt eine jeweilige Abzweigung, beispielsweise T-Stück, aufweisen, an die das Leitungssystem der Filtrationsanlage mit dem Einleitungspunkt und dem Ausleitungspunkt angeschlossen ist. Auf diese Weise kann ein Teil des in der Trinkwasserleitung geführten Wasserstroms durch die Filtrationsanlage geführt werden, während der übrige Teil durch den Abschnitt der Trinkwasserleitung, zu dem die Filtrationsanlage parallel angeschlossen ist, fließt und somit in der Trinkwasserleitung verbleibt. Diese Ausgestaltung hat beispielsweise bei Zirkulationsleitungen Vorteile, bei denen Wasser mehrfach im Kreis durch das Trinkwasserleitungssystem geführt wird. Durch das partielle Zuführen des Wassers zur Filtrationsanlage kann damit nach und nach mit einer recht kompakt ausgebildeten Filtrationsanlage ein großer Teil des gesamten Wasserstroms in der Trinkwasserleitung gefiltert werden.

Bei einer Ausführungsform wird die Filtrationsanlage abhängig von den gemessenen Messwerten gesteuert.

Insbesondere kann der Filtrationsbetrieb abhängig von den Messwerten gesteuert werden, beispielsweise die Pumpenleistung einer vorgesehenen Pumpe erhöht werden, wenn der Volumenstrom am Filtrat und/oder Retentat-Ausgang unterhalb eines vorgegebenen Mindestvolumenstroms liegt.

Weiter kann ein Vorwärtsspülvorgang und/oder ein Rückspülvorgang abhängig von den Messwerten gesteuert werden, beispielsweise beendet werden, wenn beim Spülvorgang eine vorgegebene Wassermenge den Retentat-Ausgang passiert hat. Weist die Filtrationsanlage beispielsweise einen Durchlauf-Wasserspeicher auf, so kann beispielsweise der Rückspülvorgang beendet werden, wenn ein vom Volumen des Durchlauf-Wasserspeichers abhängiges Spülvolumen den Retentat-Ausgang passiert hat.

Weitere Merkmale und Vorteile der Filtrationsanlage, des Trinkwasserleitungssystems, des Verfahrens und des Computerprogramms ergeben sich aus der nachfolgenden Beschreibung von Ausführungsbeispielen, wobei auf die beigefügte Zeichnung Bezug genommen wird.

In der Zeichnung zeigen
- Fig. 1a-c: ein Beispiel für eine Filtrationsanlage und dessen Funktionsweise aus dem Stand der Technik,
- Fig. 2a-c: ein erstes Ausführungsbeispiel einer erfindungsgemäßen Filtrationsanlage, eines erfindungsgemäßen Trinkwasserleitungssystems und eines erfindungsgemäßen Verfahrens,
- Fig. 3: ein weiteres Ausführungsbeispiel einer erfindungsgemäßen Filtrationsanlage, eines erfindungsgemäßen Trinkwasserleitungssystems und eines erfindungsgemäßen Verfahrens,
- Fig. 4a-g: Beispiele für den Wasserspeicher gemäß Fig. 3,
- Fig. 5a-c: ein weiteres Ausführungsbeispiel des Verfahrens zur Steuerung des Trinkwasserleitungssystems aus Fig. 3,
- Fig. 6a-b: ein weiteres Ausführungsbeispiel des Verfahrens zur Steuerung des Trinkwasserleitungssystems aus Fig. 3,
- Fig. 7a-c: ein weiteres Ausführungsbeispiel des Verfahrens zur Steuerung des Trinkwasserleitungssystems aus Fig. 3 und
- Fig. 8a-c: ein weiteres Ausführungsbeispiel des Verfahrens zur Steuerung des Trinkwasserleitungssystems aus Fig. 3.

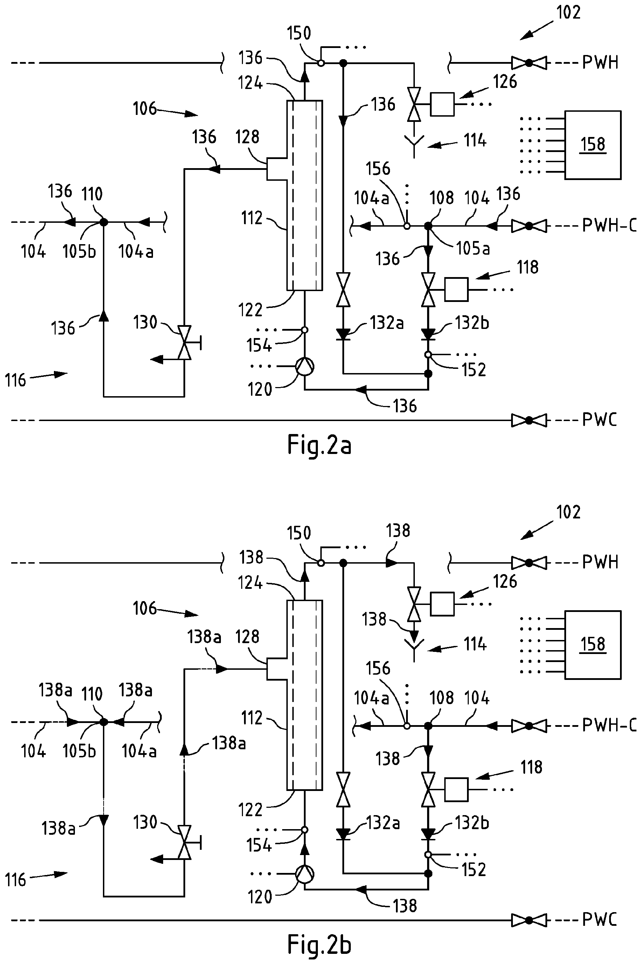

Die Fig. 2a-c zeigen ein erstes Ausführungsbeispiel der Filtrationsanlage und des Trinkwasserleitungssystems sowie des Verfahrens in schematischer Darstellung.

Das Trinkwasserleitungssystem 102 umfasst Kaltwasserleitungen (PWC), Warmwasserleitungen (PWH) und Warmwasser-Zirkulationsleitungen (PWH-C). Eine Warmwasser-Zirkulationsleitung ist an eine Warmwasserleitung angeschlossen, beispielsweise über ein Drosselventil oder über ein T-Stück, um das in der Warmwasserleitung fließende Wasser zu zirkulieren, insbesondere zu einem Warmwasserbereiter zurückzuleiten.

Das Trinkwasserleitungssystem 102 umfasst insbesondere eine Trinkwasserleitung 104, an die eine Filtrationsanlage 106 angeschlossen ist. Bei der Trinkwasserleitung 104 kann es sich insbesondere um eine Warmwasser-Zirkulationsleitung (PWH-C) handeln.

Die Filtrationsanlage 106 weist einen Einleitungspunkt 108 auf, an dem Wasser aus der Trinkwasserleitung 104 in die Filtrationsanlage 106 eingeleitet wird, einen Ausleitungspunkt 110, an dem gefiltertes Wasser aus der Filtrationsanlage 106 in die Trinkwasserleitung 104 geleitet wird, einen Querstrom-Wasserfilter 112 sowie einen Ablasspunkt 114 zum Ablassen von Wasser auf.

Die Filtrationsanlage 106 ist zu einem Abschnitt 104a der Trinkwasserleitung 104 parallel geschaltet, indem die Filtrationsanlage 106 am Einleitungspunkt 108 und am Ausleitungspunkt 110 über jeweilige Abzweigstücke 105a-b, beispielsweise T-Stücke, an der Trinkwasserleitung 104 angeschlossen ist. Das Trinkwasserleitungssystem 102 ist so eingerichtet, dass im Filtrationsbetrieb ein bestimmter Anteil des durch die Trinkwasserleitung fließenden Wassers, beispielweise 25 % des Volumenstroms, in die Filtrationsanlage geleitet wird, während der Rest, beispielsweise 75 % des Volumenstroms, durch den Abschnitt 104a geleitet wird. Durch die kontinuierliche Zirkulation des Warmwassers im Trinkwasserleitungssystem 102 wird auf diese Weise nach und nach eine Filterung des Wassers im Warmwasserkreislauf erreicht.

Die Filtrationsanlage 106 weist ein Leitungssystem 116 mit mehreren Leitungen auf. Das Leitungssystem 116 verbindet den Einleitungspunkt 108 über ein steuerbares Einleitungs-Ventil 118 und eine Pumpe 120 mit dem Filter-Eingang 122 des Querstrom-Wasserfilters 112. Das Leitungssystem 116 verbindet weiter den Retentat-Ausgang 124 des Querstrom-Wasserfilters 112 mit dem Filter-Eingang 122 des Querstrom-Wasserfilters 112 sowie über ein steuerbares Ablassventil 126 mit dem Ablasspunkt 114. Weiter verbindet das Leitungssystem 116 den Filtrat-Ausgang 128 des Querstrom-Wasserfilters 112 über ein Ventil 130 mit dem Ausleitungspunkt 110.

In das Leitungssystem 116 sind weiter mehrere Rückflussverhinderer 132a-b integriert.

Anders als die Filtrationsanlage 6 weist die Filtrationsanlage 106 keinen Rückflussverhinderer zwischen dem Filtrat-Ausgang 128 und dem Ausleitungspunkt 110 auf. Zudem weist die Filtrationsanlage 106 anders als die Filtrationsanlage 6 einen Retentat-Ausgangs-Sensor 150 auf, der im vorliegenden Ausführungsbeispiel als Volumenstromsensor ausgebildet ist und den aus dem Retentat-Ausgang 124 austretenden Volumenstrom misst.

Neben dem Retentat-Ausgangs-Sensor 150 kann die Filtrationsanlage 106 noch weitere Sensoren aufweisen, wie einen Volumenstromsensor 152 zur Messung des Volumenstroms des über den Einleitungspunkt 108 in die Filtrationsanlage 106 fließenden Wassers sowie einen Drucksensor 154 zur Messung des Wasserdrucks am Filter-Eingang 122. Weiterhin können auch in der Trinkwasserleitung 104 Sensoren angeordnet sein, beispielsweise ein Temperatursensor 156.

Die Filtrationsanlage 106 weist weiter eine Steuereinrichtung 158 auf, die zur Steuerung der Filtrationsanlage 106 eingerichtet ist. Bei der Steuereinrichtung 158 kann es sich um eine gesonderte Steuereinrichtung der Filtrationsanlage 106 handeln. Alternativ kann die Steuereinrichtung 158 aber zum Beispiel auch eine Steuereinrichtung für das Trinkwasserleitungssystem 102 oder eines noch übergeordnetes Trinkwassersystems sein, die die Steuerung der Filtrationsanlage 106 übernimmt.

Die Steuereinrichtung 158 ist mit dem Retentat-Ausgangs-Sensor 150 und vorzugsweise mit den weiteren Sensoren 152, 154, 156 über kabelgebundene und/oder kabellose Datenverbindungen (in Fig. 2a durch unterbrochene punktierte Linien angedeutet) verbunden, so dass die Steuereinrichtung 158 die Messwerte der Sensoren empfangen kann. Auf diese Weise wird mit der Steuereinrichtung 158 eine Überwachung der Filtrationsanlage 106 ermöglicht.

Weiter ist die Steuereinrichtung 158 vorzugsweise mit dem Einleitungs-Ventil 118, dem Ablassventil 126 und/oder der Pumpe 120 über kabelgebundene und/oder kabellose Steuerverbindungen (in Fig. 2a durch unterbrochene punktierte Linien angedeutet) zu deren Steuerung verbunden. Auf diese Weise wird eine Steuerung der Filtrationsanlage 106 mit der Steuereinrichtung 158 ermöglicht. Die Steuereinrichtung 158 ist vorzugsweise dazu eingerichtet, die Filtrationsanlage 106 abhängig von den empfangenen Messwerten der Sensoren zu steuern.

Fig. 2a illustriert den regulären Filtrationsbetrieb der Filtrationsanlage 106 anhand der Pfeile 136, die den Wasserfluss im Filtrationsbetrieb anzeigen. Beim Filtrationsbetrieb ist das Einleitungs-Ventil 118 geöffnet und das Ablassventil 126 geschlossen. Mit der Pumpe 120 wird das am Einleitungspunkt 108 aus der Trinkwasserleitung 104 in die Filtrationsanlage 106 eingeleitete Wasser, zum Beispiel 25% des in der Trinkwasserleitung 104 fließenden Wassers, in den Querstrom-Wasserfilter 112 geleitet. Ein Teil des Wassers gelangt durch das Filtermaterial des Querstrom-Wasserfilters 112 als Filtrat zum Filter-Ausgang 128 des Querstrom-Wasserfilters 112 und wird dann über den Ausleitungspunkt 110 zurück in die Trinkwasserleitung 104 abgeführt. Der übrige Teil des Wassers tritt aufgrund der hydraulischen Widerstände innerhalb des Wasserfilters aus dem Retentat-Ausgang 124 des Querstrom-Wasserfilters 112 aus und wird über die Pumpe 120 zurück zum Filter-Eingang 122 geleitet.

Über den Retentat-Ausgangs-Sensor 150 kann während des Filtrationsbetriebs der Volumenstrom des aus dem Retentat-Ausgang 124 fließenden Wassers gemessen und überwacht werden. Insbesondere kann überwacht werden, ob am Retentat-Ausgang 124 ein Volumenstrom vorhanden ist oder nicht. Ein fehlender Volumenstrom am Retentat-Ausgang 124 ist Indikator für eine Fehlfunktion der Filtrationsanlage 106. Weiterhin kann eine Abweichung des Volumenstroms am Retentat-Ausgang 124 von einem Soll-Wert oder Soll-Bereich, insbesondere einem abhängig vom Volumenstrom des über den Einleitungspunkt in die Filtrationsanlage fließenden Wassers bestimmten Soll-Wert oder Soll-Bereich, anzeigen, ob der Wasserfilter 112 zugesetzt und die Durchführung eines Spülvorgangs oder ein Filterwechsel erforderlich ist.

Fig. 2b illustriert einen Vorwärtsspülvorgang der Filtrationsanlage 106 anhand der Pfeile 138, die den Wasserfluss bei dem Vorwärtsspülvorgang anzeigen. Für den Vorwärtsspülvorgang wird das Ablassventil 126 bei geöffnetem Einleitungs-Ventil 118 mehrmals nacheinander impulsartig geöffnet. Auf diese Weise kommt es im Leitungssystem 116 zu einem plötzlichen Druckabfall am Ablasspunkt 114, so dass das aus dem Retentat-Ausgang 124 des Querstrom-Filters 112 austretende Wasser zum Ablasspunkt 114 fließt und dadurch aus der Filtrationsanlage abgeleitet wird. Über den Einleitungspunkt fließt durch den dort herrschenden Wasserdruck, neues Wasser aus der Trinkwasserleitung 104 nach.

Auf diese Weise kann das mit gefilterten Stoffen angereicherte Wasser aus der Filtrationsanlage, insbesondere aus dem Querstrom-Filter, abgelassen und durch ungefiltertes Wasser ersetzt werden, das eine geringere Stoffkonzentration aufweist.

Über den Retentat-Ausgangs-Sensor 150 kann während des Vorwärtsspülvorgangs der Volumenstrom des aus dem Retentat-Ausgang 124 fließenden Wassers gemessen und überwacht werden. Auf diese Weise kann beispielsweise überwacht werden, welches Wasservolumen seit Beginn des Vorwärtsspülvorgangs durch den Wasserfilter gespült wurde. Beispielsweise kann der Vorwärtsspülvorgang automatisch beendet werden, wenn seit Beginn des Vorwärtsspülvorgangs eine vorgegebene Wassermenge den Retentat-Ausgang 124 passiert hat.

Während des Vorwärtsspülvorgangs kann ggf. auch eine geringe Menge Wasser durch den Filtrat-Ausgang 128 in den Wasserfilter 112 fließen. Dies ist in Fig. 2b durch die gestrichelten Pfeile 138a dargestellt. Dies ist für den Vorwärtsspülvorgang jedoch aufgrund der stark unterschiedlichen Fließwiderstände zwischen den beiden Strömungsrichtungen von untergeordneter Bedeutung.

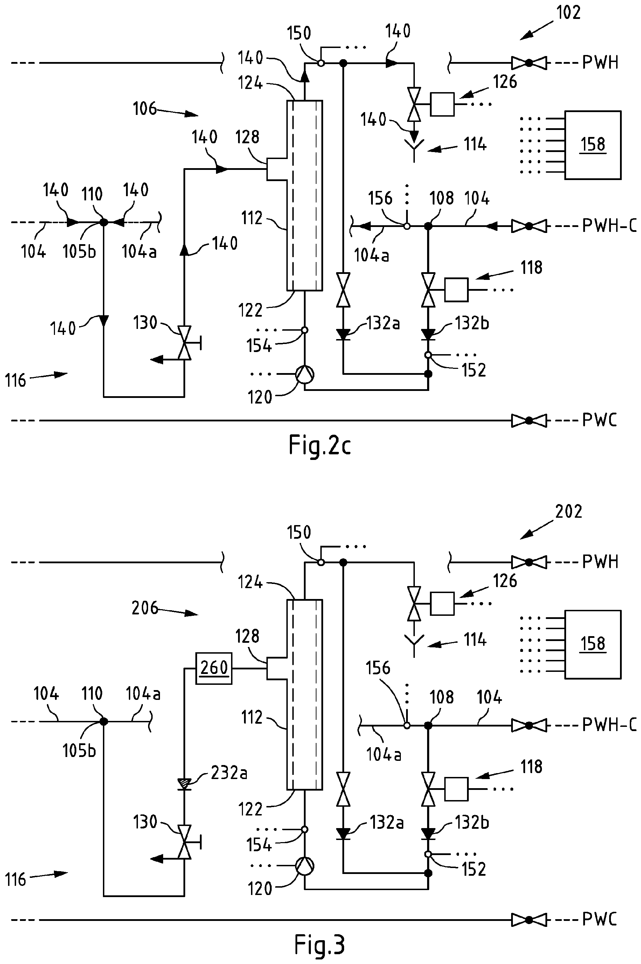

Fig. 2c illustriert einen Rückspülvorgang der Filtrationsanlage 106 anhand der Pfeile 140, die den Wasserfluss bei dem Rückspülvorgang anzeigen. Für den Rückspülvorgang wird das Einleitungs-Ventil 118 geschlossen und das Ablassventil 126 bei geschlossenem Einleitungs-Ventil 118 mehrmals nacheinander impulsartig geöffnet, so dass es am Ablasspunkt 114 zum plötzlichen Druckabfall kommt. Wegen des geschlossenen Einleitungs-Ventils 118 kann kein Wasser aus der Trinkwasserleitung 104 nachströmen. Da bei der Filtrationsanlage 106 - anders als bei der Filtrationsanlage 6 - zwischen dem Filtrat-Ausgang 128 und dem Ausleitungspunkt 110 kein Rückflussverhinderer vorgesehen ist, strömt durch den Druckabfall beim impulsartigen Öffnen des Einleitungs-Ventils 118 Wasser aus der Trinkwasserleitung 104 über den Ausleitungspunkt 110 in die Filtrationsanlage 106 und drückt dabei das zu Beginn des Rückspülvorgangs zwischen dem Filtrat-Ausgang 128 und dem Ausleitungspunkt 110 in dem Leitungssystem 116 stehende Wasservolumen durch den Filtrat-Ausgang 128 in den Wasserfilter 112, so dass dieser mit Filtrat gespült wird.

Über den Retentat-Ausgangs-Sensor 150 kann während des Rückspülvorgangs der Volumenstrom des aus dem Retentat-Ausgang 124 fließenden Wassers gemessen und überwacht werden. Auf diese Weise kann überwacht werden, welches Wasservolumen seit Beginn des Rückspülvorgangs durch den Wasserfilter 112 gespült wurde. Vorzugsweise wird der Rückspülvorgang automatisch beendet, wenn ein vorgegebener Anteil des zu Beginn des Rückspülvorgangs zwischen dem Filtrat-Ausgang 128 und dem Ausleitungspunkt 110 in dem Leitungssystem 116 stehenden Wasservolumens durch den Wasserfilter 112 gespült wurde. Auf diese Weise kann der Rückspülvorgang automatisch beendet werden, bevor das über den Ausleitungspunkt 110 einströmende Wasser aus der Trinkwasserleitung 104 zum Filtrat-Ausgang 128 gelangt.

Fig. 3 zeigt ein weiteres Ausführungsbeispiel der Filtrationsanlage und des Trinkwasserleitungssystems in schematischer Darstellung.

Das Trinkwasserleitungssystem 202 und die Filtrationsanlage 206 weisen jeweils einen ähnlichen Aufbau auf wie das Trinkwasserleitungssystem 102 bzw. die Filtrationsanlage 106 aus Fig. 2a. Einander entsprechende Komponenten sind mit gleichen Bezugszeichen versehen und es wird insoweit auf die obigen Ausführungen zu den Fig. 2a-c verwiesen.

Die Filtrationsanlage 206 unterscheidet sich dadurch von der Filtrationsanlage 106, dass zwischen dem Filtrat-Ausgang 128 und dem Ausleitungspunkt 110 ein Wasserspeicher 260 angeordnet ist. Weiterhin wird, abhängig von der Art des Wasserspeichers 260, ein Rückflussverhinderer 232a zwischen Filtrat-Ausgang 128 und Ausleitungspunkt 110 vorgesehen oder weggelassen. Dies wird für die einzelnen Varianten des Wasserspeichers 260 nachfolgend noch genauer beschrieben.

Die Steuereinrichtung 158 kann bei der Filtrationsanlage 206 mit dem Wasserspeicher zu dessen Überwachung und/oder Steuerung verbunden sein.

Wie die Filtrationsanlage 106 kann auch die Filtrationsanlage 206 in einem regulären Filtrationsbetrieb betrieben werden, bei dem das Einleitungs-Ventil 118 geöffnet und das Ablassventil 126 geschlossen ist und in dem mit der Pumpe 120 Wasser aus der Trinkwasserleitung 104 in den Querstrom-Wasserfilter 112 geleitet wird. Für die weitere Funktionsweise des Filtrationsbetriebs wird auf die obigen Ausführungen zu Fig. 2a verwiesen.

Weiter kann an der Filtrationsanlage 206 wie bei der Filtrationsanlage 106 ein Vorwärtsspülvorgang durchgeführt werden, bei dem das Ablassventil 126 bei geöffnetem Einleitungs-Ventil 118 mehrmals nacheinander impulsartig geöffnet wird. Hierzu wird auf die obigen Ausführungen zu Fig. 2b verwiesen.

Weiter kann an der Filtrationsanlage 206 wie bei der Filtrationsanlage 106 ein Rückspülvorgang durchgeführt werden, bei dem das Ablassventil 126 bei geschlossenem Einleitungs-Ventil 118 mehrmals nacheinander impulsartig geöffnet wird. Hierzu wird auf die obigen Ausführungen zu Fig. 2c verwiesen.

Die jeweilige Rolle des Wasserspeichers 260 für den regulären Filtrationsbetrieb und die Spülvorgänge wird nachfolgend noch genauer beschrieben.

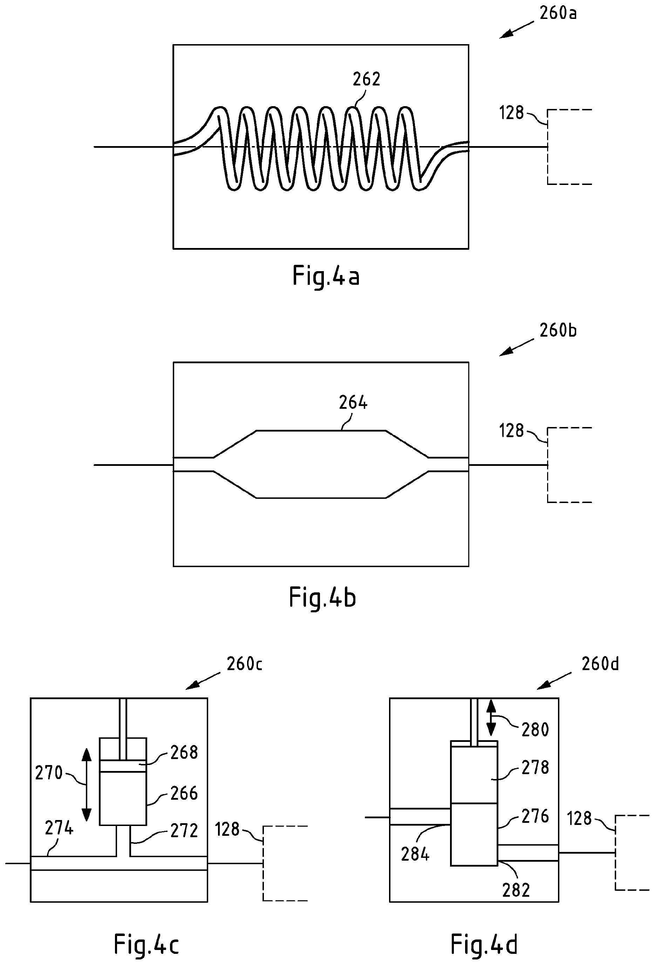

Die Fig. 4a-g zeigen denkbare Ausgestaltungen 260a-g für den Wasserspeicher 260 aus Fig. 3 in schematischer Darstellung. Die Filtrationsanlage 206 stellt mit jedem der Wasserspeicher 260a-g als Wasserspeicher 260 ein jeweiliges Ausführungsbeispiel der Filtrationsanlage dar.

Die Fig. 4a und 4b zeigen zwei Beispiele für einen Durchlauf-Wasserspeicher.

Der Durchlauf-Wasserspeicher 260a in Fig. 4a ist als Rohrwendelspeicher ausgebildet und umfasst einen spiralartig aufgewickelten Leitungsabschnitt 262. Auf diese Weise weist der Leitungsabschnitt zwischen einem vorgegebenem Anfang und einem vorgegebenen Ende eine größere Länge und damit eine größeres Wasservolumen auf als ein entsprechender gerader Leitungsabschnitt. Alternativ sind auch Durchlauf-Wasserspeicher mit anders gewundenem Leitungsabschnitt zur Vergrößerung der Leitungslänge denkbar, beispielsweise Zick-zack-förmig gebogene Leitungsabschnitte. Der Durchlauf-Wasserspeicher weist vorzugsweise ein großes Verhältnis zwischen Länge und Durchmesser des Leitungsabschnitts auf.

Der Durchlauf-Wasserspeicher 260b in Fig. 4b ist als Rohrspeicher ausgebildet und umfasst einen Leitungsabschnitt 264 mit vergrößertem Querschnitt. Auf diese Weise kann der Leitungsabschnitt des Rohrspeichers ein größeres Wasservolumen aufnehmen.

Ist der Wasserspeicher 260 als Durchlauf-Wasserspeicher ausgebildet, so ist zwischen dem Filtrat-Ausgang 128 und dem Ausleitungspunkt 110 insbesondere kein Rückflussverhinderer 232a angeordnet. Analog zu Fig. 2c strömt in diesem Fall auch bei der Filtrationsanlage 206 Wasser aus der Trinkwasserleitung 104 über den Ausleitungspunkt 110 in die Filtrationsanlage 206 und drückt dabei das zu Beginn des Rückspülvorgangs zwischen dem Filtrat-Ausgang 28 und dem Ausleitungspunkt 110 in dem Leitungssystem 116 stehende Wasservolumen durch den Filtrat-Ausgang 128 in den Wasserfilter 112, so dass dieser mit Filtrat gespült wird. Durch die Verwendung eines Durchlauf-Wasserspeichers als Wasserspeicher 260 steht zu Beginn eines Rückspülvorgangs ein größeres Filtratvolumen zwischen dem Filtrat-Ausgang 128 und dem Ausleitungspunkt 110 zur Verfügung, so dass ein größeres Filtratvolumen durch den Filtrat-Ausgang 128 in den Wasserfilter 112 gespült werden kann, ohne dass ungefiltertes Wasser in den Bereich des Filtrat-Ausgangs 128 gelangt. Ein Durchlauf-Wasserspeicher hat zudem den Vorteil, dass Stagnationswasser vermieden wird und der Rückspülvorgang mit frischem Filtrat durchgeführt wird.

Die Fig. 4c bis 4f zeigen vier Beispiele für einen Aktiv-Wasserspeicher.

Der Aktiv-Wasserspeicher 260c in Fig. 4c weist einen Zylinder 266 mit einem darin angeordneten Kolben 268 auf, der durch Ansteuerung eines Wasserspeicher-Aktuators 270 (in Fig. 4b als Doppelpfeil illustriert), zum Beispiel eines Motors, im Zylinder 266 verfahren werden kann. Der Wasserspeicher-Aktuator 270 ist vorzugsweise zu dessen Steuerung mit der Steuereinrichtung 158 verbunden. Der Zylinder 266 ist über ein Abzweigstück 272 seitlich an einen durchgehenden Leitungsabschnitt 274 angeschlossen. Wird der Kolben 268 im Zylinder nach oben verfahren, so vergrößert sich das Volumen des Aktiv-Wasserspeichers 260c; wird der Kolben 268 im Zylinder nach unten verfahren, so verkleinert sich das Volumen des Aktiv-Wasserspeichers 260c, optional auf Null, wenn der Kolben 268 bis zum Grund des Zylinders verfahren wird. Bei dieser Ausgestaltung ist vorzugsweise ein Rückflussverhinderer 132a zwischen Filtrat-Ausgang 128 und Ausleitungspunkt 110 vorgesehen.

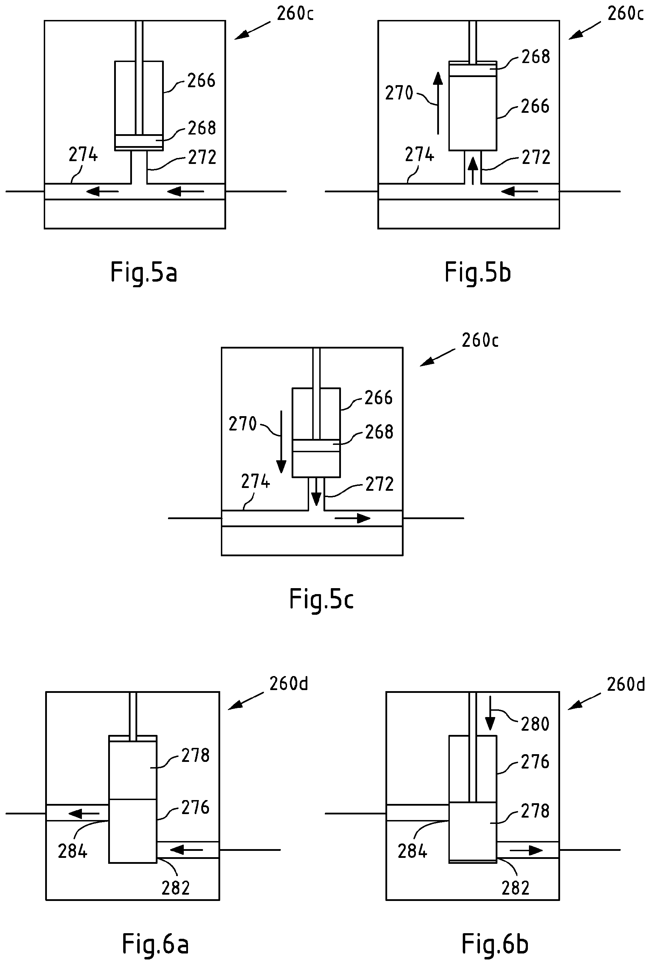

Die Fig. 5a-c zeigen ein Beispiel für eine mögliche Steuerung der Filtrationsanlage 206 mit einem Aktiv-Wasserspeicher 260c als Wasserspeicher 260 in schematischer Darstellung. Insbesondere kann die Steuereinrichtung 158 eingerichtet sein, die Filtrationsanlage 206 entsprechend zu steuern.

Für den regulären Filtrationsbetrieb wird der Kolben 268 mit dem Wasserspeicher-Aktuator 270 vorzugsweise in die tiefste Position verfahren, so dass das Volumen des Aktiv-Wasserspeichers 260c - wie in Fig. 5a dargestellt - minimal, vorzugsweise Null, ist. Auf diese Weise wird während des regulären Filtrationsbetriebs Stagnationswasser im Aktiv-Wasserspeicher 260c vermieden. Vor Beginn eines Rückspülvorgangs wird der Kolben 268 mit dem Wasserspeicher-Aktuator 270 - wie in Fig. 5b dargestellt - nach oben verfahren, so dass sich der Aktiv-Wasserspeicher 260c mit frischem Filtrat füllt. Während des Rückspülvorgangs wird der Kolben 268 mit dem Wasserspeicher-Aktuator 270 wieder nach unten verfahren, so dass das Filtrat aus dem Aktiv-Wasserspeicher 260c in den Leitungsabschnitt 274 gedrückt wird und - dem Druckabfall folgend - zum Filtrat-Ausgang 128 geleitet wird.

Ist der Rückflussverhinderer 132a vorgesehen, kann der gesamte Rückspülvorgang praktisch allein durch das Verfahren des Kolbens 268 gesteuert werden. Zudem wird auf diese Weise verhindert, dass ungefiltertes Wasser zum Aktiv-Wasserspeicher 260c oder zum Filtrat-Ausgang 128 gelangen kann.

Der Aktiv-Wasserspeicher 260d in Fig. 4d weist wie der Aktiv-Wasserspeicher 260c in Fig. 4c ebenfalls einen Zylinder 276 mit einem darin angeordneten Kolben 278 auf, der über einen Wasserspeicher-Aktuator 280 verfahrbar ist. Der Wasserspeicher-Aktuator 280 ist vorzugsweise zu dessen Steuerung mit der Steuereinrichtung 158 verbunden. Anders als der Aktiv-Wasserspeicher 260c ist der Aktiv-Wasserspeicher 260d derart an das Leitungssystem 116 angeschlossen, dass der Zylinder 276, wenn der Kolben 278 nach oben gefahren ist, von im Leitungssystem fließendem Wasser durchströmt wird. Zu diesem Zweck weist der Zylinder 276 einen Aktiv-Wasserspeicher-Eingang 282 und einen Aktiv-Wasserspeicher-Ausgang 284 auf.

Die Fig. 6a-b zeigen ein Beispiel für eine mögliche Steuerung der Filtrationsanlage 206 mit einem Aktiv-Wasserspeicher 260d als Wasserspeicher 260 in schematischer Darstellung. Insbesondere kann die Steuereinrichtung 158 eingerichtet sein, die Filtrationsanlage 206 entsprechend zu steuern.

Für den regulären Filtrationsbetrieb wird der Kolben 278 mit dem Wasserspeicher-Aktuator 280 nach oben verfahren, so dass das Volumen des Aktiv-Wasserspeichers 260 - wie in Fig. 6a dargestellt - groß, vorzugsweise maximal ist. Der Aktiv-Wasserspeicher 260d wird dann vom Aktiv-Wasserspeicher-Eingang 282 zum Aktiv-Wasserspeicher-Ausgang 284 mit Filtrat durchströmt, so dass das Wasser im Aktiv-Wasserspeicher 260d kontinuierlich ausgetauscht und Stagnationswasser vermieden wird. Während des Rückspülvorgangs wird der Kolben 278 mit dem Wasserspeicher-Aktuator 280 - wie in Fig. 6b dargestellt - nach unten verfahren. Der Aktiv-Wasserspeicher 260d ist so ausgebildet, dass der Wasserspeicher-Ausgang 284 verschlossen wird, wenn sich der Kolben 278 nach unten bewegt, beispielsweise - wie in Fig. 6d - gezeigt durch einen entsprechend ausgestalteten Kolben, durch ein am Wasserspeicher-Ausgang 284 angeordnetes, ansteuerbares Ventil (nicht dargestellt) oder durch einen am Wasserspeicher-Ausgang 284 vorgesehenen Rückflussverhinderer (nicht dargestellt). Beim Verfahren des Kolbens 278 nach unten, wird das in dem Aktiv-Wasserspeicher 260d vorhandene Wasser durch den Aktiv-Wasserspeicher-Eingang 282 in Richtung Filtrat-Ausgang 128 geleitet, wodurch eine Rückspülung mit Filtrat erreicht wird. Durch das Schließen des Wasserspeicher-Ausgang 284 wird verhindert, dass Wasser aus der Trinkwasserleitung 104 über den Ausleitungspunkt 110 in den Aktiv-Wasserspeicher 260d oder zum Filtrat-Ausgang 128 gelangen kann.

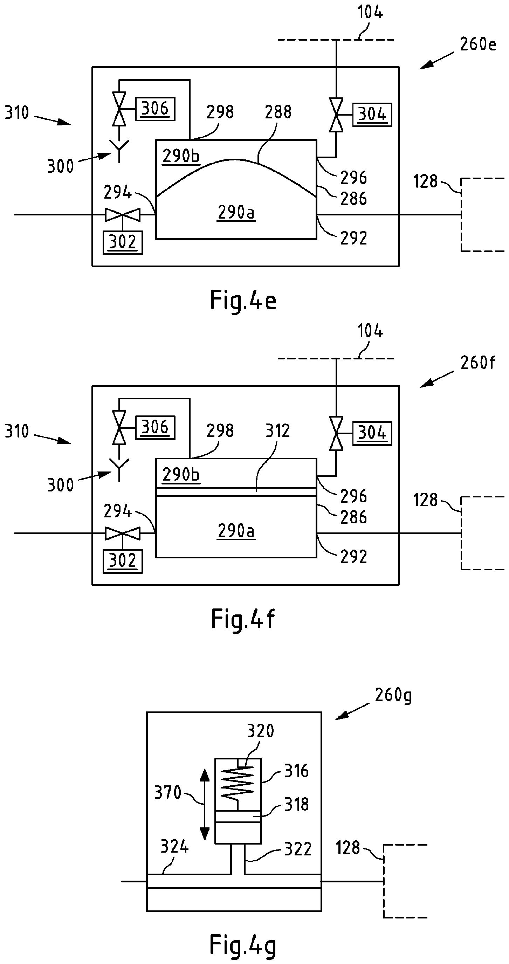

Der Aktiv-Wasserspeicher 260e in Fig. 4e weist ein Gefäß 286 mit einer darin angeordneten Membran 288 auf, die das Gefäß 286 in zwei voneinander getrennte Bereiche 290a-b teilt. Der Aktiv-Wasserspeicher 260e ist derart an das Leitungssystem 116 angeschlossen, dass der Bereich 290a von im Leitungssystem 116 fließendem Wasser durchströmt wird. Zu diesem Zweck weist das Gefäß am Bereich 290a einen Aktiv-Wasserspeicher-Eingang 292 und einen Aktiv-Wasserspeicher-Ausgang 294 auf. Im Bereich 290b weist das Gefäß weiter einen Aktuator-Eingang 296 und einen Aktuator-Ausgang 298 auf. Der Aktuator-Eingang 296 ist an eine Wasserleitung mit einem Wasserdruck, vorzugsweise an die Trinkwasserleitung 104, angeschlossen. Der Aktuator-Ausgang 298 ist an einen Ablasspunkt 300 angeschlossen. Über steuerbare Ventile 302, 304, 306 können der Aktiv-Wasserspeicher-Ausgang 294, der Aktuator-Eingang 296 und der Aktuator-Ausgang 298 jeweils gesperrt werden.

Die steuerbaren Ventile 304, 306 und ggf. 302 stellen einen Wasserspeicher-Aktuator 310 des Aktiv-Wasserspeichers 260e dar. Der Wasserspeicher-Aktuator 310 ist vorzugsweise zu dessen Steuerung mit der Steuereinrichtung 158 verbunden.

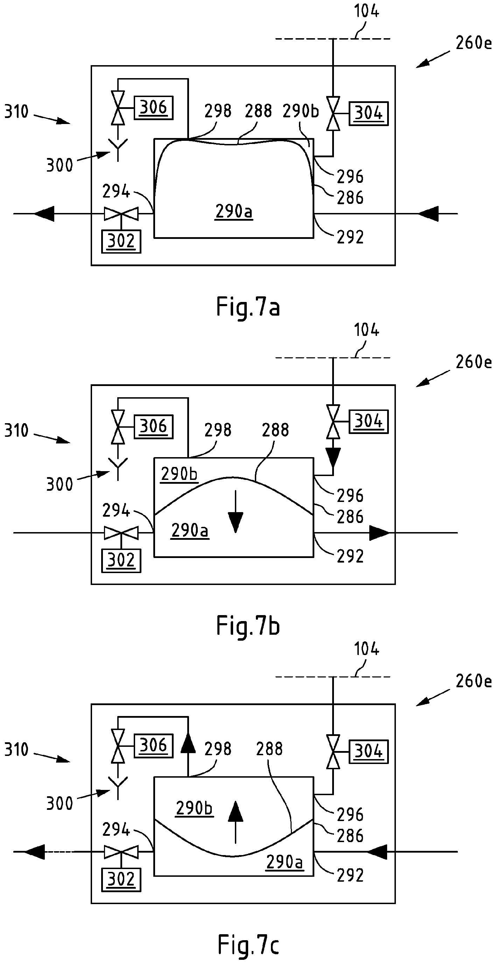

Die Fig. 7a-c zeigen ein Beispiel für eine mögliche Steuerung der Filtrationsanlage 206 mit einem Aktiv-Wasserspeicher 260e als Wasserspeicher 260 in schematischer Darstellung. Insbesondere kann die Steuereinrichtung 158 eingerichtet sein, die Filtrationsanlage 206 entsprechend zu steuern.

Beim regulären Filtrationsbetrieb ist das Ventil 302 geöffnet und das Ventil 304 geschlossen. Der Bereich 290a füllt - wie in Fig. 7a gezeigt - im Wesentlichen den gesamten Innenraum des Gefäßes 286 aus und wird mit Filtrat durchströmt. Auf diese Weise wird Stagnationswasser im Bereich 290a vermieden. Für den Rückspülvorgang wird das Ventil 302 geschlossen und das Ventil 304 geöffnet. Weiterhin ist das Ventil 306 geschlossen. Durch Öffnen des Ventils 304 gelangt Wasser über den Aktuator-Eingang 296 in den Bereich 290b, füllt diesen aus und drückt dadurch - wie in Fig. 7b gezeigt - die Membran 288 nach unten, so dass das Wasser im Bereich 290a durch den Aktiv-Wasserspeicher-Eingang 292 in Richtung Filtrat-Ausgang 128 geleitet wird, so dass der Wasserfilter mit Filtrat rückgespült wird. Am Ende des Rückspülvorgangs wird Ventil 304 geschlossen und Ventil 306 geöffnet, so dass wieder Filtrat durch den Aktiv-Wasserspeicher-Eingang 292 in den Bereich 290a fließt, die Membran 288 - wie in Fig. 7c gezeigt - anhebt und das Wasser aus dem Bereich 290b über den Aktuator-Ausgang 298 zum Ablasspunkt 300 geführt wird, so dass sich der Zustand aus Fig. 7a wieder einstellt. Anschließend oder optional auch währenddessen kann das Ventil 302 wieder geöffnet werden.

Die Bewegung der Membran 288 wird bei dem Aktiv-Wasserspeicher 260e durch den Wasserdruck abhängig von der Stellung der Ventile 304, 306 und ggf. 302 bewirkt.

Der Aktiv-Wasserspeicher 260f in Fig. 4f entspricht in Aufbau und Funktionsweise dem Aktiv-Wasserspeicher 260e aus Fig. 4e; einander entsprechende Komponenten sind mit gleichen Bezugszeichen versehen und es wird auf die obigen Ausführungen verwiesen. Der Aktiv-Wasserspeicher 260f unterscheidet sich lediglich dadurch vom Aktiv-Wasserspeicher 260e, dass anstelle der Membran 288 ein beweglicher Kolben 312 vorgesehen ist, der sich in dem vorliegend zylinderförmigen Gefäß 286 nach oben und unten bewegen kann.

Gegenüber einem konventionellen Membranausdehnungsgefäß hat ein Aktiv-Wasserspeicher, wie die Aktiv-Wasserspeicher 260a-f, den Vorteil, dass sie eine aktive Steuerung des Wasserspeichers und damit eine kontrollierte(re) Rückspülung ermöglichen. Darüber hinaus funktionieren die Wasserspeicher-Aktuatoren auch bei schlagartigen Druckänderungen zuverlässig über einen längeren Zeitraum, während das Gaspolster eines Membranausdehnungsgefäßes hierfür nicht primär ausgelegt ist und daher kurze Wartungszyklen bedingt.

Die Fig. 4g zeigt ein Beispiel für einen Federdruck-Wasserspeicher. Der Federdruck-Wasserspeicher weist einen Zylinder 316 mit einem darin angeordneten beweglichen Element 318 in Form eines Kolbens auf, der durch eine Feder 320 druckbelastet ist. Der Zylinder 316 ist über ein Abzweigstück 322 seitlich an einen durchgehenden Leitungsabschnitt 324 angeschlossen.

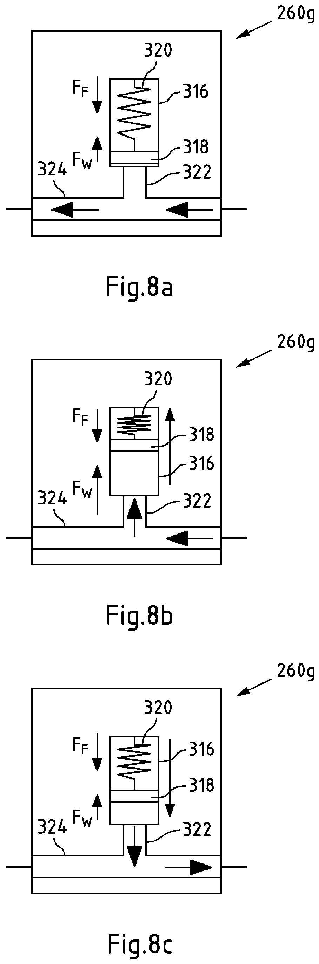

Die Fig. 8a-c zeigen ein Beispiel für eine mögliche Steuerung der Filtrationsanlage 206 mit einem Aktiv-Wasserspeicher 260g als Wasserspeicher 260 in schematischer Darstellung. Insbesondere kann die Steuereinrichtung 158 eingerichtet sein, die Filtrationsanlage 206 entsprechend zu steuern.

Die Feder 320 ist so gewählt, dass die Federkraft F_{F} beim regulären Filtrationsbetrieb größer ist als die vom Wasserdruck bewirkte Kraft Fw auf den Kolben 318. Der Kolben 318 ist daher im Filtrationsbetrieb - wie in Fig. 8a gezeigt - bis nach unten gefahren, so dass es zu keinem Stagnationswasser im Zylinder 316 kommt.

Vor Beginn eines Rückspülvorgangs wird die Leistung der Pumpe 120 erhöht, wodurch sich der Druck im Leitungssystem 116 zwischen dem Filtrat-Ausgang 128 und dem Ausleitungspunkt 110 erhöht. Die Kraft Fw ist dann größer als die Federkraft F_{F}, so dass der Kolben 318 - wie in Fig. 8b gezeigt - nach oben gedrückt wird und sich der Zylinder 316 mit Filtrat füllt. Beim Rückspülvorgang führt das Öffnen des Ablassventils 126 zu einem Druckabfall, so dass der Kolben 318 - wie in Fig. 8c gezeigt - durch die Feder 320 wieder nach unten gedrückt wird und das Filtrat - dem Druckabfall folgend - in Richtung Filtrat-Ausgang 128 geleitet wird, so dass der Wasserfilter mit Filtrat rückgespült wird.

### Bezugszeichenliste:

- 2, 102, 202: Trinkwasserleitungssystem
- 4, 104: Trinkwasserleitung
- 6, 106, 206: Filtrationsanlage
- 8, 108: Einleitungspunkt
- 10, 110: Ausleitungspunkt
- 12, 112: Wasserfilter
- 14, 114, 300: Ablasspunkt
- 16, 116: Leitungssystem
- 18, 118: Einleitungs-Ventil
- 20, 120: Pumpe
- 22, 122: Filter-Eingang
- 24, 124: Retentat-Ausgang
- 26, 126: Ablassventil
- 28, 128: Filtrat-Ausgang
- 30, 130: Ventil
- 32a-c, 132a-b, 232a: Rückflussverhinderer
- 34: Membranausdehnungsgefäß
- 36, 136: Pfeile (Wasserfluss im Filtrationsbetrieb)
- 38, 138, 138a: Pfeile (Wasserfluss beim Vorwärtsspülvorgang)
- 40, 140: Pfeile (Wasserfluss beim Rückspülvorgang)
- 105a-b, 272, 322: Abzweigstücke
- 104a: Abschnitt der Trinkwasserleitung
- 150: Retentat-Ausgangs-Sensor
- 152: Volumenstromsensor
- 154: Drucksensor
- 156: Temperatursensor
- 158: Steuereinrichtung
- 260: Wasserspeicher
- 260a-b: Durchlauf-Wasserspeicher
- 260c-f: Aktiv-Wasserspeichers
- 260g: Federdruck-Wasserspeicher
- 262: aufgewickelter Leitungsabschnitt
- 264: Leitungsabschnitt mit vergrößertem Querschnitt
- 266,276,316: Zylinder
- 268, 278, 312, 318: Kolben
- 270, 280, 310: Wasserspeicher-Aktuator
- 274,324: Leitungsabschnitt
- 282,292: Aktiv-Wasserspeicher-Eingang
- 284, 294: Aktiv-Wasserspeicher-Ausgang
- 286: Gefäß
- 288: Membran
- 290a-b: Bereiche des Gefäßes 286
- 296: Aktuator-Eingang
- 298: Aktuator-Ausgang
- 302, 304, 306: Ventil, steuerbare Ventile
- 320: Feder
- F_{F}: Federkraft
- Fw: durch Wasserdruck bewirkte Kraft

## Patentansprüche

1. Filtrationsanlage (106, 206) für ein Trinkwasserleitungssystem (102, 202),
- mit einem Einleitungspunkt (108) zum Einleiten von Wasser in die Filtrationsanlage (106, 206),
- mit einem Ausleitungspunkt (110) zum Ausleiten von gefiltertem Wasser aus der Filtrationsanlage (106, 206),
- mit einem Wasserfilter (112), insbesondere Querstrom-Filter, der einen Filter-Eingang (122), einen Filtrat-Ausgang (128) und einen Retentat-Ausgang (124) aufweist,
- mit einem Ablasspunkt (114) zum Ablassen von Wasser aus der Filtrationsanlage (106, 206) und
- mit einem Leitungssystem (116), wobei das Leitungssystem (116)
- den Einleitungspunkt (108) mit dem Filter-Eingang (122) verbindet,
- den Filtrat-Ausgang (128) mit dem Ausleitungspunkt (110) verbindet und
- den Retentat-Ausgang (124) mit dem Filter-Eingang (122) und mit dem Ablasspunkt (114) verbindet,
- wobei im Leitungssystem (116) ein steuerbares Ablassventil (126) vorgesehen ist, mit dem das Ablassen von Wasser aus der Filtrationsanlage (106, 206) am Ablasspunkt (126) gesteuert werden kann,
**dadurch gekennzeichnet,**
- **dass** im Leitungssystem (116) ein Retentat-Ausgangs-Sensor (150) vorgesehen ist, mit dem der Volumenstrom, der Druck und/oder die Temperatur des aus dem Retentat-Ausgang (124) austretenden Wassers gemessen werden kann,
**und/oder**
- **dass** im Leitungssystem (116) zwischen dem Filtrat-Ausgang (128) und dem Ausleitungspunkt (110)
- ein Durchlauf-Wasserspeicher (260a-b) vorgesehen ist **oder**
- ein Aktiv-Wasserspeicher (260c-f) mit einem ansteuerbaren Wasserspeicher-Aktuator (270, 280, 310) vorgesehen ist, wobei in dem Aktiv-Wasserspeicher (260c-f) enthaltenes Wasser durch Ansteuerung des Wasserspeicher-Aktuators (270, 380, 310) aus dem Aktiv-Wasserspeicher (260c-f) in Richtung des Filtrat-Ausgangs (128) geleitet werden kann, **oder**
- ein Federdruck-Wasserspeicher (260g) mit einem federbelasteten beweglichen Element (318) vorgesehen ist, wobei das Wasservolumen des Federdruck-Wasserspeichers (260g) bei Erhöhung des Wasserdrucks durch Bewegung des beweglichen Elements (318) steigt.

2. Filtrationsanlage nach Anspruch 1,
**dadurch gekennzeichnet, dass** der Durchlauf-Wasserspeicher (260a-b) durch einen Leitungsabschnitt gebildet wird, der zur Verlängerung der Leitungslänge des Leitungsabschnitts, insbesondere zur Vergrößerung des Leitungsvolumens, gewunden ist, vorzugsweise spiralartig ausgebildet ist, mehrere Biegungen aufweist und/oder Zick-zack-förmig ausgebildet ist.

3. Filtrationsanlage nach Anspruch 1 oder 2,
**dadurch gekennzeichnet, dass** eine Steuereinrichtung (158) vorgesehen ist, die dazu eingerichtet ist, eine Steuerung der Filtrationsanlage (6, 106, 206) gemäß einem Verfahren nach einem der Ansprüche 10 bis 14 zu bewirken.

4. Filtrationsanlage nach einem der Ansprüche 1 bis 3,
**dadurch gekennzeichnet, dass** eine Steuereinrichtung (158) vorgesehen ist, die dazu eingerichtet ist, einen Filtrationsbetrieb, einen Vorwärtsspülvorgang und/oder einen Rückspülvorgang abhängig von mit dem Retentat-Ausgangs-Sensor (150) gemessenen Messwerten zu steuern.

5. Filtrationsanlage nach einem der Ansprüche 1 bis 4,
**dadurch gekennzeichnet, dass** der Aktiv-Wasserspeicher (260c-f) ein durch Ansteuerung des Wasserspeicher-Aktuators (270, 280, 310) veränderbares Fassungsvermögen aufweist.

6. Filtrationsanlage nach einem der Ansprüche 1 bis 5,
**dadurch gekennzeichnet, dass** der Aktiv-Wasserspeicher (260c-f) derart an das Leitungssystem (116) angeschlossen ist, dass der Aktiv-Wasserspeicher (260c-f) im Filtrationsbetrieb der Filtrationsanlage (106, 206) von im Leitungssystem (116) fließendem Wasser durchströmt wird.

7. Trinkwasserleitungssystem (102, 202),
- mit einer Trinkwasserleitung (104), insbesondere einer Warmwasser-Zirkulationsleitung, und
- mit einer Filtrationsanlage (106, 206) nach einem der Ansprüche 1 bis 6,
- wobei die Filtrationsanlage (106, 206) mit ihrem Einleitungspunkt (108) und ihrem Ausleitungspunkt (110) an die Trinkwasserleitung (104) angeschlossen ist.

8. Trinkwasserleitungssystem nach Anspruch 7,
**dadurch gekennzeichnet, dass** die Filtrationsanlage (106, 206) in Reihe an die Trinkwasserleitung (104) angeschlossen ist.

9. Trinkwasserleitungssystem nach Anspruch 7,
**dadurch gekennzeichnet, dass** die Filtrationsanlage (106, 206) zu einem Abschnitt (104a) der Trinkwasserleitung (104) parallel angeschlossen ist.

10. Verfahren zur Steuerung einer Filtrationsanlage (106, 206) nach einem der Ansprüche 1 bis 6 oder eines Trinkwasserleitungssystems (102, 202) nach einem der Ansprüche 7 bis 9,
- bei dem während eines Filtrationsbetriebs der Filtrationsanlage (106, 206), während eines Vorwärtsspülvorgangs der Filtrationsanlage (106, 206) und/oder während eines Rückspülvorgangs der Filtrationsanlage (106, 206) unter Verwendung des Retentat-Ausgangs-Sensors (150) Messwerte für den Volumenstrom, den Druck und/oder die Temperatur des aus dem Retentat-Ausgang (124) austretenden Wassers gemessen werden,
**und/oder**
- bei dem während eines Rückspülvorgangs der Filtrationsanlage (106, 206) der Wasserspeicher-Aktuator (270, 280, 310) derart angesteuert wird, dass in dem Aktiv-Wasserspeicher (260c-f) enthaltenes Wasser aus dem Aktiv-Wasserspeicher (260c-f) in Richtung des Filtrat-Ausgangs (128) geleitet wird,
**und/oder**
- bei dem der Wasserdruck am Federdruck-Wasserspeicher (260g) vor einem Rückspülvorgang so eingestellt wird, dass sich der Federdruck-Wasserspeicher (260g) mit Wasser füllt, und während eines Rückspülvorgangs so eingestellt wird, dass Wasser aus dem Federdruck-Wasserspeicher (260g) herausgedrückt und in Richtung des Filtrat-Ausgangs (128) geleitet wird.

11. Verfahren nach Anspruch 10,
**dadurch gekennzeichnet, dass** die Filtrationsanlage (106, 206) abhängig von den gemessenen Messwerten gesteuert wird, vorzugsweise der laufende Filtrationsbetrieb, der laufende Vorwärtsspülvorgang und/oder der laufende Rückspülvorgang abhängig von den Messwerten gesteuert wird.

12. Verfahren nach Anspruch 10 oder 11,
**dadurch gekennzeichnet, dass** ein laufender Spülvorgang, insbesondere ein laufender Vorwärtsspülvorgang oder ein laufender Rückspülvorgang, beendet wird, wenn die unter Verwendung des Retentat-Ausgangs-Sensors (150) gemessenen Messwerte ergeben, dass während des laufenden Spülvorgangs ein vorgegebenes Spülvorgangs-Spülwasservolumen aus dem Retentat-Ausgang (124) ausgetreten ist.

13. Verfahren nach einem der Ansprüche 10 bis 12,
**dadurch gekennzeichnet, dass** der Wasserspeicher-Aktuator (270, 280, 310) derart angesteuert wird, dass das Fassungsvermögen des Aktiv-Wasserspeichers während eines laufenden Filtrationsbetriebs einem Minimalvolumen entspricht und vor Beginn eines Rückspülvorgangs vergrößert wird, so dass sich der Aktiv-Wasserspeicher (260c-f) vor Beginn des Rückspülvorgangs füllt.

14. Verfahren nach einem der Ansprüche 10 bis 13,
**dadurch gekennzeichnet, dass** eine Pumpe (120) der Filtrationsanlage (106, 206) während des Filterbetriebs abhängig von den unter Verwendung des Retentat-Ausgangs-Sensors (150) gemessenen Messwerten gesteuert wird, insbesondere derart, dass der Volumenstrom durch den Retentat-Ausgang (124) in einem vorgegebenen Sollbereich bleibt.

15. Computerprogramm, aufweisend Befehle, deren Ausführung durch eine Steuereinrichtung (158) einer Filtrationsanlage (106, 206) nach einem der Ansprüche 1 bis 6 oder durch eine Steuereinrichtung (158) einer Filtrationsanlage (106, 206) eines Trinkwasserleitungssytems nach einem der Ansprüche 7 bis 9 die Steuerung der Filtrationsanlage (106, 206) entsprechend eines Verfahrens nach einem der Ansprüche 10 bis 14 bewirkt.
